(19) Europäisches Patentamt
European Patent Office
Office européen des brevets

(11) **EP 3 017 319 B1**

(12) **EUROPÄISCHE PATENTSCHRIFT**

(45) Veröffentlichungstag und Bekanntmachung des Hinweises auf die Patenterteilung:
**25.08.2021 Patentblatt 2021/34**

(21) Anmeldenummer: **14739343.3**

(22) Anmeldetag: **01.07.2014**

(51) Int Cl.:
*G01S 13/72* (2006.01)       *G01S 13/87* (2006.01)
*G01S 7/41* (2006.01)        *G01S 7/40* (2006.01)

(86) Internationale Anmeldenummer:
**PCT/CH2014/000091**

(87) Internationale Veröffentlichungsnummer:
**WO 2015/000089 (08.01.2015 Gazette 2015/01)**

(54) **VERFAHREN ZUR BESTIMMUNG VON TRAJEKTORIEN BEWEGLICHER PHYSISCHER OBJEKTE IN EINEM RAUM, AUF DER BASIS VON SENSORDATEN MEHRERER SENSOREN**

METHOD FOR DETERMINING TRAJECTORIES OF MOVING PHYSICAL OBJECTS IN A SPACE ON THE BASIS OF SENSOR DATA OF A PLURALITY OF SENSORS

PROCÉDÉ PERMETTANT DE DÉTERMINER LA TRAJECTOIRE D'OBJETS PHYSIQUES MOBILES DANS UN ESPACE, SUR LA BASE DES DONNÉES DE DÉTECTION DE PLUSIEURS CAPTEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2013 CH 12022013**

(43) Veröffentlichungstag der Anmeldung:
**11.05.2016 Patentblatt 2016/19**

(73) Patentinhaber: **Schweizerische Eidgenossenschaft Eidgenössisches Department für Verteidigung, Bevölkerungsschutz u. Sport Armasuisse, Wissenschaft und Technologie**
**3602 Thun (CH)**

(72) Erfinder: **SCHÄR, Sacha**
**3052 Zollikofen (CH)**

(74) Vertreter: **Keller Schneider Patent- und Markenanwälte AG (Bern) Eigerstrasse 2 Postfach 3000 Bern 14 (CH)**

(56) Entgegenhaltungen:
WO-A1-2007/144570        DE-A1- 10 133 945
DE-A1-102005 041 705     DE-A1-102010 019 147

• BLACKMAN S ET AL: "MULTIPLE SENSOR TRACKING: ISSUES AND METHODS", DESIGN AND ANALYSIS OF MODERN TRACKING SYSTEMS, XX, XX, 1. Januar 1999 (1999-01-01), Seiten 595-659, XP002277517,
• ASSEO S J: "Integration of active and passive track files from internetted aircraft for enhanced situation awareness", 19880523; 19880523 - 19880527, 23. Mai 1988 (1988-05-23), Seiten 242-250, XP010076898,

EP 3 017 319 B1

## Beschreibung

### Technisches Gebiet

Die Erfindung betrifft ein Verfahren zur Bestimmung von Trajektorien beweglicher physischer Objekte in einem Raum, auf der Basis von Sensordaten mehrerer Sensoren. Die Erfindung betrifft weiter eine Anordnung zur Bestimmung von Trajektorien beweglicher physischer Objekte in einem Raum

### Stand der Technik

Die Bestimmung von Trajektorien beweglicher physischer Objekte, z. B. von Flugbahnen von Flugobjekten, hat vielerlei Anwendungen. Beim Tennis wird beispielsweise mittels mehrerer hochauflösender Kameras die Flugbahn eines Tennisballs berechnet, um rechnerisch festzustellen, ob er den Boden innerhalb oder ausserhalb eines zulässigen Bereichs berührt.

Andere Anwendungen betreffen beispielsweise die Überwachung des Luftraums über einem regionalen Gebiet zur Flugsicherung oder zu Verteidigungszwecken. Dabei wird festgestellt, wo sich Flugobjekte befinden, wohin sie fliegen und wenn möglich, um welche Art von Flugobjekten es sich handelt.

Je nach Grösse und Topografie des überwachten Raums ist ein einzelner Sensor für eine umfassende Abdeckung unzureichend, insbesondere dann, wenn eine Abschattung der Radarsignale durch Gebirge besteht und/oder eine Begrenzung der Abdeckung durch die Reichweite eines einzelnen Sensors unerwünscht ist. Ferner liefern beispielsweise übliche Suchradarstationen bezüglich der Elevation keine oder nur eine ungenaue Information, welche für die Zuweisung eines im Idealfall punktförmigen Aufenthaltsorts nicht ausreicht. Entsprechend ist es von Vorteil, bei der Luftraumüberwachung eine Vielzahl unterschiedlich platzierter Sensoren zu nutzen.

Ohne besondere Vorkehrungen erfordert der Einsatz eine Vielzahl von Sensoren für eine umfassende und lückenlose Überwachung jedoch auch eine entsprechende Vielzahl operativer Nutzer, da von jedem Sensor ein eigenes Luftlagebild hervorgerufen wird. Die Integration mehrerer Luftlagebilder in ein Gesamtbild ist aufwändig, oft ist es system- bzw. kapazitätsbedingt auch nicht möglich, sämtliche von den Sensorstationen detektierte Information zu verwerten.

Um den Aufwand zu reduzieren, um beispielsweise zu ermöglichen, dass ein einziger operativer Nutzer ein konsolidiertes Luftlagebild basierend auf der Vielzahl von Sensoren gewinnen kann, kann eine sogenannte Sensordatenfusion vollzogen werden, d. h. die Messdaten der einzelnen Sensoren werden miteinander vereint und erst das Resultat dieser Vereinigung wird zur Anzeige gebracht oder anderweitig weiter verarbeitet. Dadurch kann der gesamte durch die Sensoren abgedeckte Raum durch einen einzelnen operativen Nutzer überwacht oder die Luftraumüberwachung auf beliebige Weise auf mehrere Nutzer aufgeteilt werden.

Die Grundlage für die Sensordatenfusion sind laufend eintreffende Datensätze verschiedener Sensoren. Die Datensätze werden ausgewertet und kombiniert. Da die Sensoren wie oben erwähnt in der Regel voneinander beabstandet sind und Ortsangaben relativ zu den jeweiligen Sensorstandorten liefern, werden die Datensätze in der Regel in verschiedenen Koordinatensystemen erfasst, was im Rahmen der Fusion zu berücksichtigen ist.

Abgesehen von der Aufbereitung einer umfassenden und konsolidierten Ansicht einer Situation, welche durch mehrere Sensoren erfasst wird, kann die Sensordatenfusion weitere Vorteile bieten. So findet in ihrem Rahmen eine Art Mittelung der aus den Sensordaten erzeugten Ortsinformation statt, wodurch der statistische Fehler verkleinert wird. Entsprechend ermöglichen die Daten, die aus der Sensordatenfusion resultieren, eine höhere Präzision und/oder ein besseres Auflösungsvermögen gegenüber der Fusion zu Grunde liegenden Sensordaten. Weiter können die fusionierten Daten eine höhere Dimension aufweisen als die Sensordaten, es wird beispielsweise aus 2D-Sensordaten der einzelnen Sensoren (1 Winkel, 1 Abstand) ein 3D-Luftlagebild erstellt.

Aus dem Stand der Technik sind Verfahren zur Sensordatenfusion bekannt. Diese sehen üblicherweise vor, dass die durch die Sensordaten repräsentierten Dichtefunktionen direkt miteinander korreliert werden, wobei eine hohe Korrelation als Grundlage für eine gegenseitige Zuordnung der Sensordaten dient. Diese Korrelation geht typischerweise mit einer Transformation der Sensordaten in ein Referenz-Koordinatensystem einher und ist in der Regel aufgrund der geometrischen Komplexität der Dichtefunktionen nur näherungsweise berechenbar. Eine kontinuierliche Annäherung, beispielsweise durch ein iteratives Verfahren, ist durch die zeitlich und materiell begrenzte Rechenkapazität nur bedingt möglich.

Die genannte Näherung führt zu einer Ungenauigkeit bei den fusionierten Sensordaten und kann zu Fehlern bei der Zuordnung der Sensordaten zu Objekten führen. Darunter leidet die Präzision der ermittelten Ortsangaben.

Um eine effiziente und effektive Näherung zu erreichen, ist es erforderlich, dass die Sensordatenfusion die sensorspezifische Gestalt der Sensordaten berücksichtigt. Dies bedeutet, dass die angenäherte Korrelation insgesamt nicht nach einem allgemeinen Prinzip vollzogen werden kann, sondern zumindest teilweise mit sensorspezifischen Verfahrensschritten. Das konkret in einem System verwendete Verfahren ist somit an die gerade verwendeten Sensoren anzupassen, was die Flexibilität stark reduziert, weil bei einer Änderung der Systemkonfiguration auch das Auswerteverfahren angepasst werden muss.

Eine Strategie bei der Umsetzung einer angenäherten Korrelation verschiedenartiger Sensordaten beinhaltet die Annäherung der Dichtefunktionen an eine entsprechend parametrisierte universelle Dichtefunktion, so dass zumindest die eigentliche Korrelation nach einem allgemeinen Prinzip erfolgen kann. Je nach Sensortyp ist für eine gute Annährung der Sensordaten eine mehr oder weniger komplexe universelle Dichtefunktion erforderlich. Die Komplexität der universellen Dichtfunktion ist jedoch wiederum durch die Rechenkapazität begrenzt, so dass auch hier Ungenauigkeiten in Kauf genommen werden müssen.

Eine andere Strategie bei der Umsetzung einer angenäherten Korrelation verschiedenartiger Sensordaten besteht darin, dass für jede Kombination von Sensortypen ein, für diese Kombination optimiertes, Teilverfahren zur Korrelation der Dichtefunktionen entwickelt wird. Dies ist jedoch nur dann handhabbar, wenn die Sensordatenfusion eine verhältnismässig kleine Anzahl unterschiedlicher Sensoren umfasst.

Die Sensoren, welche die Daten erfassen, beispielsweise Radarstationen, unterliegen oft grossen Ungenauigkeiten. Zudem muss stets auch mit systematischen Fehlern der Daten gerechnet werden, die bei einer Auswerteeinheit eintreffen. So sind auch die Angaben über Distanz zum Flugobjekt und Azimut Genauigkeitsschwankungen und/oder systematischen Fehlern unterworfen. Jeder Sensor ist zudem auf einen bestimmten Erfassungswinkel und -bereich und insbesondere auf ein bestimmtes geographisches Gebiet beschränkt, das durch Bergzüge begrenzt sein kann. Teilweise treffen auch Daten von Sensoren ein, die nicht oder nur beschränkt selbst kontrolliert werden und gegebenenfalls nur lückenhafte Daten liefern. Daten können insbesondere auch zeitverzögert eintreffen, sodass sie Informationen über Sichtungen liefern, die beispielsweise 10 bis 30 Sekunden zurückliegen. Besonders wenn diese Messungen Regionen betreffen, aus der ansonsten spärlich Messdaten gewonnen werden können, ist es nützlich, auch diese alten Daten in die Auswertung einzubeziehen.

In der DE 10 2005 041 705 A1 (Oerlikon Contraves AG) ist ein Verfahren zur Luftraumüberwachung angegeben. Bei diesem Verfahren werden Raumkurven in den verschiedenen Koordinatensystemen mehrerer Sensoren ermittelt und in jeweils nächste Koordinatensysteme übertragen. Im Koordinatensystem des letzten berücksichtigten Sensors werden alle Raumkurven mit den Messungen verglichen.

Diese Umrechnung ist sehr aufwändig. Ferner ist es erforderlich, dass die Messungen der berücksichtigen Sensoren im Wesentlichen denselben Zeitpunkt betreffen. Das Verfahren geht weiter davon aus, dass sämtliche Sensoren im Wesentlichen desselben Typs sind. Es ist somit wenig flexibel. Es können beispielsweise weder Daten bearbeitet werden, die Zeitpunkte betreffen, zu welchen nur Daten eines einzelnen Sensors vorliegen, noch Daten die nicht unmittelbar von einem der spezifischen Sensoren stammen. Dies führt einerseits zu einem Informationsverlust, der mit verringerter Präzision einhergeht, andererseits sind bei einer Veränderung oder Ergänzung des Gesamtsystems durch weitere, insbesondere andersartige, Radarstationen oder durch zusätzliche Sensoren mit einem anderen Erfassungsprinzip aufwändige Anpassungen notwendig. Ferner geht das Verfahren davon aus, dass im Wesentlichen gleiche Sensoren verwendet werden. Eine Berücksichtigung von unterschiedlichen Messcharakteristiken oder Messfehlern einzelner Sensoren ist nicht vorgesehen.

In dem Kapitel "Multiple Sensor Tracking: Issues and Methods" von S. Blackman et al. (Design and Analysis of Modern Tracking Systems, 1. Januar 1999, S. 595-659, XP002277517) wird ein Verfahren für das Tracking mit mehreren (Radar-)Sensoren beschrieben. Die Sensordaten werden fusioniert, anschliessend werden abgeleitete Grössen ermittelt. Letztlich geht es darum, Sensordaten verschiedener Sensoren und gegebenenfalls verschiedener Natur einem Set von Trajektorien zuzuordnen. Bei einer möglichen Variante der Datenspeicherung und Berechnung führt jedes lokale Sensorsystem sowohl seine eigenen Trajektorien nach als auch die Trajektorien, die sich aus dem Gesamtsystem ergeben und innerhalb des Systems ausgetauscht werden. Lokale Messungen werden zunächst daraufhin untersucht, ob sie lokalen Trajektorien zugeordnet werden können; falls nicht, erfolgt die Prüfung einer möglichen Zuordnung zu Trajektorien des Gesamtsystems; ist diese nicht erfolgreich, wird eine neue Trajektorie angelegt. Die Zuordnung zu den einzelnen Trajektorien erfolgt mittels Wahrscheinlichkeitsfunktionen. Übliche Optimierungsverfahren können zur Ermittlung der bestmöglichen Zuordnung eingesetzt werden.

Bei den Trajektorien in diesem Dokument handelt es sich um eine Liste von Positionen zu gegeben Zeiten. Eine Extrapolation in die jüngeren Vergangenheit oder nähere Zukunft muss hier durch zusätzliche Rechenschritte erreicht werden, wenn diese gewünscht wird: Dies erschwert die Auswertung von verzögert eintreffenden Messungen und Daten und erhöht den Rechenaufwand.

Die Veröffentlichung von S.J. Asseo "Integration of active an passive track files from internetted aircraft for enhanced situation awareness" (S. 232-250, XP010076898) betrifft ein Verfahren zur Fusion von Informationen über Ziele, die von mehreren Flugzeugen gewonnen wurden. In jedem Flugzeug werden die Daten lokaler Sensoren integriert, um lokale Pfadinformationen zu erhalten. Diese lokalen Informationen werden dann zentral fusioniert, wobei für die Daten aller miteinander verknüpften Flugzeuge dasselbe Koordinatensystem zum Einsatz kommt. "Geisterpfade" werden mittels Anwendung mehrerer Kriterien auf Paare von jeweils zwei Pfaden von unterschiedlicher Sensoren, eliminiert.

Die Auswertung der Daten ist in diesem Fall daraus ausgelegt, dass Pfade mehrerer Sensoren zur Verfügung stehen. Daher ist das vorgestellte Verfahren störungsanfällig: Der Ausfall von Sensoren oder der Ausfall der Datenübertragung beeinflussen auch die Auswertung der noch zur Verfügung stehenden Daten.

Die WO 2007/144570 A1 (BAE Systems) betrifft ein dezentral organisiertes Netzwerk mit einer Reihe von Sensoren (z. B. Radarstationen), wobei zur Beschreibung von Trajektorien Mehrmodell-Verfahren eingesetzt werden. Zum Einbezug lokal ermittelter und von anderen Sensoren erhaltener Beobachtungsdaten werden zwei verschiedene Verfahren eingesetzt.

Durch die unterschiedlichen Verfahren beim Einbezug von Daten aus verschiedenen Quellen ist das dort beschriebene Verfahren wenig flexibel.

**Darstellung der Erfindung**

Aufgabe der Erfindung ist es, ein dem eingangs genannten technischen Gebiet zugehörendes Verfahren zur Bestimmung von Trajektorien beweglicher physischer Objekte, sowie eine entsprechende Anordnung zu schaffen, welche eine hohe Flexibilität aufweisen und Ergebnisse hoher Präzision liefern.

Die Lösung der Aufgabe ist durch die Merkmale des Anspruchs 1 definiert. Gemäss der Erfindung umfasst das Verfahren zur Bestimmung von Trajektorien beweglicher physischer

Objekte in einem Raum, auf der Basis von Sensordaten mehrerer Sensoren, gemäß Anspruch 1.

Eine zur Durchführung des Verfahrens geeignete Anordnung zur Bestimmung von Trajektorien beweglicher physischer Objekte in einem Raum, umfasst die Merkmale gemäß Anspruch 12.

Bei den Datenobjekten und Modellobjekten handelt es sich um virtuelle Objekte im Sinn der objektorientierten Programmierung. Die Objekte sind beispielsweise Instanzen einer Datenobjektklasse bzw. einer Modellobjektklasse, wobei alle Datenobjektklassen bzw. Modellobjektklassen von jeweils einem übergeordneten Muster (bzw. einer Basisklasse) abgeleitet sind. Die Muster legen insbesondere fest, auf welche Art und Weise Daten zwischen allen Objekten ausgetauscht werden können. Es können eine oder mehrere Datenobjektklassen und eine oder mehrere Modellobjektklassen definiert sein. Jedes Daten- sowie Modellobjekt kann wie im Folgenden ausgeführt sowohl Attribute als auch Methoden umfassen. Die Methoden umfassen z. B. solche für die Validierung (Datenobjekt) oder zur Ortsbestimmung zu einem gewissen Zeitpunkt (Modellobjekt).

Im Folgenden wird unter einer Ortsangabe eine Angabe verstanden, die einen Rückschluss auf einen Aufenthaltsort oder -bereich eines Objekts erlaubt. Bezogen auf den dreidimensionalen Raum kann es sich dabei insbesondere um eine eindimensionale Angabe (z. B. Winkel, Distanz), eine zweidimensionale Angabe (zwei Winkel, Winkel und Distanz, zwei Distanzen) oder auch eine dreidimensionale Angabe, welche einen Punkt im Raum auszeichnet, handeln. Neben Ortsangaben können die Datenobjekte auch weitergehende aus den Sensordaten gewonnene Informationen umfassen, insbesondere Geschwindigkeitsangaben zu den von den Sensoren erfassten Objekten.

Ein Datenobjekt umfasst insbesondere diejenigen Angaben, die auf eine Messung eines bestimmten Sensors zurückgehen, insbesondere die entsprechenden Sensordaten oder davon abgeleitete Informationen. Ein Datenobjekt kann aber auch bereits Angaben mehrerer Sensoren (gleicher oder unterschiedlicher Art) oder über mehrere Messungen umfassen, diese Angaben können auch bereits vorverarbeitet und/oder miteinander kombiniert sein. Für die Erzeugung des Datenobjekts werden die vom eigentlichen Sensor gelieferten Rohdaten üblicherweise einer Vorverarbeitung unterzogen. Im Rahmen dieser Vorverarbeitung werden die Daten u. a. validiert, normiert, paketiert und/oder annotiert. Die Vorverarbeitung kann insbesondere vom Sensor und/oder dem Sensor zugeordneten Verarbeitungsmitteln durchgeführt werden.

Der Übereinstimmungswert kann stets für sämtliche möglichen Zuordnungen eines Datenobjekts zu den bereitgestellten Modellobjekten berechnet werden. Dies ist jedoch nicht zwingend: Der Vergleichsvorgang kann beispielsweise abgebrochen werden, wenn der zuletzt berechnete Übereinstimmungswert eine gewisse Güte erreicht, die den Schluss erlaubt, dass die Zuordnung mit sehr hoher Wahrscheinlichkeit richtig ist. Ebenfalls können z. B. externe Informationen berücksichtigt werden, welche beispielsweise eine Identifikation des Datenobjekts mit einem oder mehreren der Modellobjekte von vornherein ausschliessen bzw. nahelegen.

Die Validierungsfunktionen können so definiert sein, dass ein hoher Übereinstimmungswert einer hohen Übereinstimmung entspricht, dass ein tiefer Übereinstimmungswert einer hohen Übereinstimmung entspricht oder auch, dass die Nähe zu einem bestimmten Zielwert (z. B. 0) einer maximalen Übereinstimmung entspricht. Der Wert kann sich innerhalb eines fixen Intervalls bewegen, er kann aber auch ein- oder zweiseitig unbeschränkt sein. Entsprechend können bei der Prüfung, ob ein Übereinstimmungswert im vorgegebenen Bereich liegt, unterschiedliche Kriterien herangezogen werden, z. B.

- Unterschreiten eines Maximalwerts,

- Überschreiten eines Minimalwerts,

- Liegen in einem vorgegebenen Bereich u.s.w.

Die Bereitstellung eines zusätzlichen Modellobjekts schliesst auch dessen Initialisierung ein, d. h. der mindestens eine variable Parameter des neuen Modellobjekts wird auf einen Initialwert gesetzt. Gerade wenn das Modellobjekt eine grössere Anzahl Parameter aufweist, dürfte es oft nicht möglich sein, aufgrund der bereits zugeordneten Datenobjekte alle Parameter eindeutig zu bestimmen. In solchen Fällen ist es sinnvoll, die Initialwerte aufgrund von allgemeinen Annahmen festzulegen. Für die Initialisierung kann auch zunächst ein Initialwert verwendet werden, welcher unabhängig ist von den bereits zugeordneten Datenobjekten. Im Rahmen der ersten Optimierung der Zielfunktion wird dem mindestens einen Parameter des neuen Modellobjekts dann automatisch ein auf die Sensordaten bezogener Wert zugeordnet.

Alternativ oder zusätzlich kann die Anzahl variabler Parameter eines Modellobjekts veränderlich sein. Sie kann dann an den Informationsgehalt der dem Modellobjekt bereits zugeordneten Parameter angepasst werden.

In der Regel wird wie erwähnt das verarbeitete Datenobjekt demjenigen bereitgestellten Modellobjekt zugeordnet, welches dem besten der bestimmten Übereinstimmungswerte entspricht. In Einzelfällen kann davon abgewichen werden. Falls die Sensordaten bereits eine Zuordnung zu einem Objekt (eine sog. "Track ID") umfassen, kann beispielsweise zunächst der Übereinstimmungswert in Bezug auf diese Zuordnung bestimmt werden. Ist die festgestellte Übereinstimmung gut genug, erfolgt die Zuordnung zum entsprechenden Modellobjekt, und weitere Bestimmungen von Übereinstimmungswerten unterbleiben.

Die Modellobjekte repräsentieren das Ergebnis der Auswertung. Sie repräsentieren zumindest eine Parametrisierung einer Trajektorie eines der beweglichen Objekte mit mindestens einem variablen Parameter. Die Parametrisierung basiert auf an sich bekannten Ansätzen, z. B. auf Splines oder ähnlichen Funktionen. Aus den Modellobjekten lässt sich nicht nur die aktuelle Luftlage ermitteln, sie widerspiegeln - zumindest in einem gegebenen Intervall - auch die zeitliche Entwicklung bis zum aktuellen Zeitpunkt und ermöglichen eine Projektion in die Zukunft. Eine systembedingte zeitliche Verzögerung lässt sich durch einen zeitlichen Versatz bei der Berechnung der aktuellen Objektposition (und -geschwindigkeit etc.) kompensieren.

Die Zielfunktion ist generell aus einer Mehrzahl von Parameteranpassungsfunktionen zusammengesetzt, z. B. als eine Summe derselben. Die Parameteranpassungsfunktion eines Datenobjekts ist wie die Validierungsfunktion ein Mass für die Übereinstimmung der Sensordaten des Datenobjekts mit den Parametern eines Modellobjekts. Im einfachsten Fall ist die Parameteranpassungsfunktion mit der Validierungsfunktion identisch. Sie kann aber auch eine Funktion der Validierungsfunktion sein, oder sowohl die Validierungsfunktion als auch die Parameteranpassungsfunktion basieren auf derselben Grundfunktion, sind also beispielsweise Funktionen dieser Grundfunktion. Die Kriterien für eine hohe Übereinstimmung müssen für die Validierungsfunktion und die Parameteranpassungsfunktion nicht zwingend dieselben sein: So können beispielsweise ein tiefer Wert der Validierungsfunktion aber ein hoher Wert der Parameteranpassungsfunktion eine hohe Übereinstimmung anzeigen u.s.w.

Die Datenobjekte und Modellobjekte werden in der Regel unterschiedliche (Orts-) Koordinatensysteme verwenden, so wird in den Modellobjekten mit Vorteil dasjenige Koordinatensystem verwendet, welches auch für die Ausgabe der Ergebnisse der Auswertung zum Einsatz kommen soll, z. B. ein ortsfestes, kartesisches Koordinatensystem. In den Datenobjekten können dagegen zugunsten einer einfacheren Verarbeitung sensorabhängige Koordinatensysteme zum Einsatz kommen. Diese Systeme weisen in der Regel verschiedene Nullpunkte auf, es können zudem Polar- oder Kugelkoordinaten anstelle von kartesischen Koordinaten zum Einsatz kommen. Für die Zeitangaben wird mit Vorteil ein einheitliches System genutzt, auch hier ist es aber grundsätzlich möglich, verschiedene Referenzen einzusetzen. Zur Umrechnung der Ortsund ggf. Zeitangaben zwischen den verschieden Koordinatensystemen werden zusätzliche Angaben benötigt (z. B. die Orte der Sensoren) - diese sind bevorzugt Teil der Datenobjekte, so dass durch den Einbezug eines zusätzlichen Datenobjekts auch automatisch die für die Umrechnung zwischen den Koordinatensystemen notwendigen Angaben vorliegen. In der folgenden Beschreibung wird darauf verzichtet, stets auf die Notwendigkeit einer Umrechnung zwischen Koordinatensystemen hinzuweisen. Eine solche ist grundsätzlich immer dann vorzunehmen, wenn Daten miteinander zusammenwirken sollen, die in verschiedenen Koordinatensystemen angegeben sind. Der Fachmann erkennt solche Fälle ohne Weiteres, die für die Umrechnung notwendigen Routinen sind allgemein verfügbar. Die Umwandlung wird jeweils mit Vorteil in dasjenige Koordinatensystem durchgeführt, welches die nachfolgende Verarbeitung möglichst vereinfacht.

Die einzelnen Verfahrensschritte müssen nicht zwingend in der angegebenen Reihenfolge durchgeführt werden. Das Verfahren zeichnet sich gerade dadurch aus, dass einzelne Daten- und oder Modellobjekte unabhängig voneinander bearbeitet werden können, gegebenenfalls auch auf gesonderten Rechnern und an unterschiedlichen Standorten. Die Verarbeitungsmodule können als Hard- und/oder Software realisiert sein. Üblicherweise werden sie durch Programmmodule bereitgestellt. Die Funktionen mehrerer der Module können in eine funktionale Einheit integriert sein. Beispielsweise kann ein einziges Modul vorhanden sein, welches sowohl die Aufgaben des zweiten Verarbeitungsmoduls als auch diejenigen des vierten Verarbeitungsmoduls erledigt, also die Modellobjekte bereitstellt und auch neue, zusätzliche Modellobjekte erzeugt und initialisiert.

Die Aktualisierung der Parameter eines Modellobjekts muss nicht zwingend nach jeder Neuzuordnung eines Datenobjekts stattfinden. Die Häufigkeit der Parameteranpassung kann sich nach der eingehenden Datenrate, der verfügbaren Verarbeitungskapazität und/oder einem Priorisierungsprinzip richten. Die Optimierung der Zielfunktion muss nicht in jedem Fall vollständig durchgeführt werden, es ist jeweils möglich, nur eine gewisse Zahl von Iterationen durchzuführen, um eine teilweise (grobe) Optimierung zu erreichen. Ferner kann ein Datenobjekt probehalber einem Modellobjekt zugeordnet werden, anschliessend eine Parameteranpassung durch Optimierung der Zielfunktion erfolgen, wonach anhand des neuen Übereinstimmungswerts entschieden wird, ob die Zuordnung aufrechterhalten bleibt oder wieder rückgängig gemacht wird. In einer bevorzugten Ausführungsform wird beispielsweise wie folgt vorgegangen, wobei der Einfachheit halber davon ausgegangen wird, dass ein tiefer Übereinstimmungswert einer hohen Wahrscheinlichkeit einer korrekten Zuordnung entspricht. Sind die Validierungsfunktionen anders definiert, lässt sich das Verfahren ohne Weiteres an diesen Fall anpassen. Zunächst werden die Übereinstimmungswerte für alle bzw. eine Untermenge der Modellobjekte berechnet. Liegt der tiefste ermittelte Wert über einem oberen Grenzwert, wird das Datenobjekt einem neu erzeugten Modellobjekt zugewiesen. Liegt der tiefste ermittelte Wert unterhalb einem unteren Grenzwert, wird das Datenobjekt dem entsprechenden vorhandenen Modellobjekt zugewiesen und anschliessend ebenfalls probehalber die numerische Optimierung der Zielfunktion des entsprechenden Modellobjekts durchgeführt.

Liegt der tiefste ermittelte Übereinstimmungswert zwischen dem unteren und dem oberen Grenzwert, wird das Datenobjekt dem entsprechenden Modellobjekt vorerst temporär zugeordnet und dann eine numerische Optimierung der Zielfunktion dieses Modellobjekts durchgeführt. Liegt anschliessend der Übereinstimmungswert unter dem unteren Grenzwert, erfolgt die definitive Zuordnung zu diesem Modell. Ist dies nicht der Fall, wird das Datenobjekt probehalber dem Modellobjekt mit dem zweittiefsten Übereinstimmungswert zugeordnet und die Zielfunktion dieses Modellobjekts probehalber optimiert. Dieses Verfahren wird solange fortgesetzt, bis ein Übereinstimmungswert unterhalb des unteren Grenzwerts resultiert. Wird keine entsprechende Zuordnung gefunden, wird ein neues Modellobjekt erzeugt.

Aufgrund der erfindungsgemäss klaren Trennung zwischen den in den Datenobjekten gehaltenen Sensordaten und den durch die Modellobjekte repräsentierten Modellen ergibt sich eine Reihe von Vorteilen:

- Weil zum einen die von den Sensoren erzeugten Daten gesammelt werden und jeweils mit einer Zeitangabe versehen sind und weil zum anderen der Vergleich mit den vorhandenen Modellobjekten keinerlei Gleichzeitigkeit voraussetzt, kann jederzeit das Maximum der verfügbaren Information in die Auswertung einbezogen werden. Auch lückenhafte Informationen können zum Auswerteergebnis beitragen. Dadurch wird die erreichbare Präzision erhöht. Die Vielzahl der berücksichtigten Daten ermöglicht zudem Plausibilitätschecks oder die Detektion systematischer Fehler in den Sensordaten.

- Gleichzeitig entfällt die Notwendigkeit einer Echtzeitverarbeitung. Auch hohe Latenzen im Gesamtsystem sind somit unproblematisch. Die Takte der einzelnen Sensoren und das Anzeigeintervall können vollkommen voneinander entkoppelt werden. Einzelne Daten können problemlos erst verspätet in die Auswertung einbezogen werden, es sind keinerlei besondere Massnahmen notwendig, um auch diese Daten in die Auswertung zu integrieren.

- Die Form der in einem bestimmten Datenobjekt gehaltenen Sensordaten erfordert lediglich eine Anpassung der Validierungsfunktion dieses Datenobjekts und hat ansonsten keinerlei Auswirkungen auf das Gesamtverfahren, namentlich keine Auswirkungen auf die eingesetzten Modelle für die Trajektorien. Die Integration weiterer, auch andersartiger, Sensoren ist somit stark erleichtert, sie kann auch ohne weiteres im laufenden Betrieb erfolgen ("plug & play"). Weiter ermöglicht dies - wie weiter unten ausgeführt - auch die Integration von Daten, die nicht aus Messungen eines Sensors hervorgehen. Notwendig ist lediglich eine passende Validierungsfunktion.

- Die Performance des Verfahrens lässt sich wegen des späten Zusammenbringens von Daten und Modellen und der fehlenden Notwendigkeit einer Echtzeit-Verarbeitung auf einfache Weise steigern: So ist es ohne weiteres möglich, die Datenverarbeitung auf mehrere Einheiten zu verteilen, beispielsweise können einzelne oder alle Sensorstationen bereits eine Vorverarbeitung erledigen. Ähnlicherweise lässt sich das Verfahren ohne Probleme parallelisieren. Beides ermöglicht es, grundsätzlich alle verwertbaren Daten in die Auswertung einzubeziehen und damit die Präzision zu maximieren.

- Einzelne Programmroutinen zur Auswertung von Sensor-Rohdaten und zur Generierung von Datenobjekten, die im erfindungsgemässen Verfahren und der erfindungsgemässen Anordnung verwendbar sind, können von verschiedener Seite bereitgestellt werden. Die Verknüpfung dieser Routinen mit einer oder mehreren Routinen, die das Modellobjekt bereitstellen, erfordert nicht einmal das Vorhandensein des Quellcodes der einzelnen Programmteile, die einzelnen Routinen können sogar auch erst zur Laufzeit der Software miteinander in Verbindung gebracht werden. Die einzelnen Routinen können unabhängig voneinander weiterentwickelt werden, neue Versionen können unabhängig von den anderen Programmteilen eingespielt werden.

Entsprechend weisen das erfindungsgemässe Verfahren und die erfindungsgemässe Anordnung im Vergleich mit üblichen Verfahren und Systemen zur Datenfusion eine überaus hohe Flexibilität auf und ermöglichen die Gewinnung präziser Ergebnisse. Ein allenfalls erhöhter Bedarf an die Verarbeitungskapazität der eingesetzten Datenverarbeitungsmittel kann auf einfache Weise aufgefangen werden.

Die Anwendung der Validierungsfunktion des ersten Datenobjekts auf ein Modellobjekt bedeutet, dass zunächst anhand der Trajektorie, welche vom Modellobjekt parametrisiert wird, der erwartete Aufenthaltsort des vom Modellobjekt repräsentierten Objekts zum Zeitpunkt der vom ersten Datenobjekt repräsentierten Messung berechnet wird. Die Validierungsfunktion liefert dann in Abhängigkeit dieses Aufenthaltsorts eine Aussage über die Wahrscheinlichkeit, dass die vom Datenobjekt repräsentierten Sensordaten auf das vom Modellobjekt repräsentierte Objekt zurückgehen.

Insbesondere wird eine Maximum-Likelihood-Methode eingesetzt, wobei die Validierungsfunktion proportional ist zum Logarithmus einer Wahrscheinlichkeitsdichte als Funktion des Aufenthaltsorts eines detektierten Objekts. Die Summierung mehrerer Validierungsfunktionen entspricht dann korrekterweise der Multiplikation mehrerer Wahrscheinlichkeiten. Die Wahrscheinlichkeitsdichtefunktion ergibt sich aus den Eigenschaften des oder der Sensoren, welche die Sensordaten geliefert haben, die dem entsprechenden ersten Datenobjekt zugrunde liegen. Durch die Wahl einer entsprechenden Wahrscheinlichkeitsdichtefunktion kann den Eigenschaften der Sensoren Rechnung getragen werden, z. B. der Richtungs- und/oder Distanzabhängigkeit von deren Empfindlichkeit, deren Messfehler u.s.w.

Besonders vorteilhaft sind das erfindungsgemässe Verfahren und die erfindungsgemässe Anordnung für die Verarbeitung von Radardaten. Es handelt sich somit bei den Sensordaten insbesondere um Radardaten, insbesondere um Abstands- und Winkelinformationen mehrerer räumlich distanziert angeordneter Suchradare. Durch die Fusion der Sensordaten lassen sich Informationen über den Aufenthaltsort der Objekte (inkl. Höhe), deren Geschwindigkeit und Bewegungsrichtung, den Objekttyp u.s.w. gewinnen. Im Prinzip kann ein vollständiges und einheitliches Luftlagebild gewonnen werden.

Mit Vorteil werden zusätzlich zweite Datenobjekte bereitgestellt und einem oder mehreren Modellobjekten zugeordnet, wobei diese zweiten Datenobjekte vorbekannte Informationen, insbesondere zu realistischen Aufenthaltsorten und/oder zu vermuteten zukünftigen Ereignissen, oder Randbedingungen zu möglichen Trajektorien, insbesondere maximale Geschwindigkeiten oder Beschleunigungen, repräsentieren.

Die zweiten Datenobjekte ermöglichen eine einfache Integration von Informationen, die nicht von Sensoren stammen, die Orts- und Zeitangaben liefern. Es handelt sich dabei insbesondere um eine oder mehrere der folgenden Informationen:

a) Daten zur Topographie des überwachten Gebiets: Die möglichen Aufenthaltsorte eines Flugobjekts sind beispielsweise auf Raumgebiete beschränkt, die nicht von Bergen oder Hügeln eingenommen werden, die möglichen Aufenthaltsorte eines Landfahrzeugs sind auf Positionen am Boden beschränkt u.s.w.;

b) Daten zu bekannten oder vermuteten zukünftigen Bewegungen der überwachten physischen Objekte, z. B. das Wissen oder die Vermutung, dass sich ein Flugobjekt in einem Landeanflug oder einem anderen Manöver befindet;

c) Daten zu möglichen Trajektorien einer bestimmten Klasse von überwachten Objekten, z. B. maximale (ggf. auch minimale) Geschwindigkeiten oder Beschleunigungen von Flugobjekten oder Landfahrzeugen, inkl. Steiggeschwindigkeiten, Kurvengeschwindigkeiten u.s.w., oder Flughöhen.

d) generell Daten aus dritten Quellen, welche für die Ermittlung der Trajektorie und/oder die Zuordnung der Datenobjekte zu den Modellobjekten relevant sind, z. B. zu Trajektorien oder Zuordnungen von Objekten, die aufgrund externer Datenquellen bekannt sind. Darunter fallen auch Informationen, die von Bedienpersonen des Auswertesystems manuell in das System eingespeist werden.

Die Bereitstellung und Verarbeitung derartiger zweiter Datenobjekte erfordert keine Anpassungen in der grundlegenden Funktionsweise des erfindungsgemässen Verfahrens und der erfindungsgemässen Anordnung. Externe Informationen können so auf einfache Weise in die Auswertung integriert werden, ohne Weiteres auch mitten im Betrieb des Systems. Informationen gemäss den Punkten b) und c) liefern zusätzlich eine Grundlage zur Bestimmung eines beabsichtigten Manövers bzw. der Klasse des Objekts, indem analog zur Validierung der ersten Datenobjekte verschiedene Manöver bzw. Objektklassen validiert werden können. Bei guter Übereinstimmung eines spezifischen Manövers oder einer spezifischen Objektklasse kann dies dem Benutzer zur Anzeige gebracht werden, und/oder beim Modell wird ein Parameter auf einen entsprechenden Wert gesetzt.

Entsprechend liefert die Validierungsfunktion mindestens eines der zweiten Datenobjekte einen Wert, welcher ein Mass ist für eine Wahrscheinlichkeit, dass ein betrachtetes der Modellobjekte einem physischen Objekt im beobachteten Raum entspricht, welches mit den Daten des Datenobjekts verträglich ist.

So wird die Validierungsfunktion eines Datenobjekts, welches Daten zur Topographie repräsentiert, eine tiefe Übereinstimmung anzeigen, wenn eine Trajektorie einen nicht zugelassenen Raumbereich schneidet. Die Validierungsfunktion eines Datenobjekts, welches Daten zu bekannten oder vermuteten zukünftigen Bewegungen repräsentiert, wird eine hohe Übereinstimmung anzeigen, wenn ein Modellobjekt eine Trajektorie parametrisiert, welche diesen Bewegungen entspricht. Weiter wird die Validierungsfunktion eines Datenobjekts, welches beispielsweise minimale und maximale Geschwindigkeiten einer Klasse von Flugobjekten sowie maximal mögliche Beschleunigungen repräsentiert, eine tiefe Übereinstimmung anzeigen, wenn der Geschwindigkeitsbereich von der Trajektorie eines Modellobjekts über- oder unterschritten und/oder die maximale Beschleunigung überschritten wird. Die Auswertung der Validierungsfunktion kann auf Fälle beschränkt werden, in welchen dem Modellobjekt über einen entsprechenden Parameter bereits eine Klasse (z. B. Kampfjet, Hubschrauber, Propellerflugzeug u.s.w.) zugeordnet ist, welche der vom Datenobjekt repräsentierten Klasse entspricht oder wenn den Modellobjekt noch gar keine Klasse zugeordnet ist.

Die Validierungsfunktionen der zweiten Datenobjekte fliessen wie diejenigen der ersten Datenobjekte in die Zielfunktion der Optimierung ein. Wenn z. B. bekannt ist, dass sich ein Objekt in einem bestimmten Manöver (z. B. einem Landeanflug) befindet, liefert dies zusätzliche Bedingungen bei der Bestimmung der wahrscheinlichsten Trajektorie.

Bei einem (Such)radar können diverse Störeffekte auftreten, die unmittelbar mit einem zu erfassenden Ziel zusammenhängen, insbesondere die folgenden:

a. Beugung des Radar-Strahls durch die Atmosphäre, aufgrund inhomogener Dichte der Luft (dieser Effekt ist teilweise wetterabhängig, und tritt z.B. bei Inversionslagen verstärkt auf);

b. die Induktion von Clutter (unerwünschten Radar-Echos, die aufgrund der Präsenz eines Zielobjekts entstehen, siehe unten);

c. Reflektion, z.B. an Gewässern oder Gletschern;

d. "Verbiegung" des Radar-Strahls dadurch, dass sich dieser, wie allgemein bei der elektromagnetischen Ausbreitung, bevorzugt entlang von Oberflächen bewegt. Dieser Effekt tritt beispielsweise auf, wenn der Radarstrahl parallel zu einem Berghang verläuft, und dieser Berghang eine leichte Krümmung aufweist,

Unter "induziertem Clutter" soll hier folgendes verstanden werden: Grundsätzlich treten bei Radarmessungen unerwünschte Reflektionen auf. Diese werden als "Clutter" bezeichnet. Es gibt Bodenclutter, aber auch Clutter in der Luft (z.B. bei Regen oder Schnee). Eine wichtige Aufgabe eines Radars ist es, den Clutter zu unterdrücken. Bei Boden-Clutter, wird die Tatsache ausgenutzt, dass sich dieser gegenüber dem Radar nicht bewegt, und deshalb keine Dopplerverschiebung aufweist. Ein sog. Moving Target Indicator (MTI) gibt an, ob sich ein erfasstes Ziel bewegt. Eine andere Strategie ist die Verwendung von Clutter-Maps, auf deren Basis in Gebieten, in denen vermehrt Clutter zu erwarten ist oder tatsächlich festgestellt wurde, die Empfindlichkeit des Systems reduziert oder der Aufbau neuer Tracks verhindert werden kann. Diese Handhabung von Clutter erfolgt bevor die Daten dem erfindungsgemässen Verfahren zugeführt werden. Wenn sich ein Ziel in einem Clutter-Gebiet bewegt, weisen die Radar-Echos eine Dopplerverschiebung auf. Dadurch wird die Arbeit des MTI erschwert, da es immer eine gewisse Vermischung der einzelnen Echos gibt. So kann es vorkommen, dass aufgrund der Anwesenheit des Ziels die Clutter-Unterdrückung der Radar-Prozessierung weniger gut funktioniert und Falschziele generiert werden, es wird also Clutter "induziert". Dies geschieht insbesondere wenn die Dopplerverschiebung relativ klein, und die Intensität des eigentlichen Clutters hoch ist. Die Falschziele werden analog zu den echten Zielen an das erfindungsgemässe Verfahren weitergeleitet.

Bei einer bevorzugten Ausführungsform wird zum Auswerten der Validierungsfunktion des Datenobjekts für die Modellobjekte und die Berechnung mindestens einer der Parameteranpassungsfunktionen eine modellgestützte Abbildung auf Zeit- und/oder Ortsangaben angewandt, wobei das eingesetzte Modell Störeffekte modelliert, welche die vom entsprechenden Sensor erfassten Sensordaten beeinflussen.

Dadurch können die genannten Störeffekte auf einfache und effiziente Weise korrigiert werden. Bei der Auswertung der Validierungsfunktion bzw. bei einem Iterationsschritt der numerischen Optimierung liegt ein klar definierter Zustand des Ziels (z. B. bezüglich Ort und Geschwindigkeit) vor. Damit kann durch die Modellrechnung berechnet werden, welches Radardatum beim Auftreten des entsprechenden Effektes resultieren würde. Dieses Radardatum wird dann im Rahmen der Berechnung des Übereinstimmungswerts bzw. der Berechnung der Zielfunktion mit dem tatsächlichen Radardatum verglichen.

Das Datenobjekt berechnet über einen Abbildungsmechanismus aus der Position des Ziels (im Orts- und/oder Geschwindigkeitsraum) ein Vergleichs-Sensordatum. Falls spezielle Effekte berücksichtigt werden sollen, kann dieser Abbildungsmechanismus modifiziert werden. Es resultiert ein entsprechend modifizierter Kostenterm im Übereinstimmungswert oder in der Parameteranpassungsfunktion. Ob ein modifizierter Abbildungsmechanismus herangezogen wird, kann von Fall zu Fall aufgrund der Datengrundlage entschieden werden. Es ist jedoch wichtig, dass dieser Entscheid für alle Iterationen einer numerischen Optimierung beibehalten wird, d. h. dass sich die Zielfunktion während der Optimierung nicht ändert.

Grunsdätzlich kann die Abbildung wahlweise auf der Ebene der durch das Modellobjekt parametrisierten Trajektorie, namentlich durch Anpassung der gemäss der modellierten Trajektorie ermittelten Position, oder auf der Ebene der Sensordaten, durch eine Korrektur der gemessenen Grössen, stattfinden.

Um Störeffekte zu erfassen, welche zu einer Vervielfachung von Signalen eines zu erfassenden physischen Objekts führen, kann die modellgestützte Abbildung bevorzugt zwei oder mehr Abbilder erzeugen.

Derartige Vervielfachungen treten insbesondere bei Reflektionen, z. B. an Gewässern oder Gletschern, auf. Je nach Topographie kann ein Objekt mehrfach reflektiert werden, so dass nicht nur eine Verdoppelung stattfindet, sondern zwei oder mehr Abbilder erzeugt werden.

In solchen Fällen erzeugt die modellgestützte Abbildung durch verschieden definierte Abbildungsmechanismen mehrere Vergleichsdaten. Entsprechend resultieren für den Übereinstimmungswert und die Zielfunktion zwei oder mehrere Kosten-Terme. Diese werden addiert.

Dadurch werden durch eine Spiegelung hervorgerufene Radardaten nicht einfach verworfen oder führen gar zur Generierung weiterer Modellobjekte, sondern sie werden aktiv und auf natürliche Weise in die Auswertung miteinbezogen. Letztlich erscheint es so, also ob noch ein zusätzlicher Sensor (nämlich der gespiegelte Sensor) Daten liefern würde. Interessant ist hierbei insbesondere auch die Tatsache, dass die Radialkomponente der Geschwindigkeit (welche meistens als Bestandteil des Sensordatums zur Verfügung steht), in eine andere Richtung zeigt. Diese Information lässt sich grundsätzlich verwerten und zur Verbesserung der bestimmten Trajektorien einsetzen.

Bei Radarmessungen können Fehler auftreten, die sich im Vergleich zur Aufdatierungsrate des Sensors nur langsam ändern, d. h. z. B. über mehrere Sekunden annähernd konstant sind, sog. "systematische Fehler". So wirken sich beispielsweise die folgenden systematischen Fehler auf den gemessenen Azimut aus:

1. eine fehlerhafte Nordeinrichtung des Systems;

2. eine fehlerhafte Annahme über die absolute Position des Systems im Gelände;

3. eine ungenaue mechanische Justierung innerhalb der Mechanik des Systems;

4. Radar-Glint und weitere Effekte bei der Wellenausbreitung;

5. ein Offset im Zeitstempel.

Beim letzten Punkt ergibt sich indirekt ein Azimutfehler, weil in der Regel von einem exakten Zeitstempel ausgegangen wird. Bei einem Vorbeiflug eines Ziels hat ein Zeitversatz sehr ähnliche Auswirkungen wie ein Azimutversatz.

Wie sich diese Fehlerquellen auf den Azimut auswirken, hängt von zusätzlichen Rahmenbedingungen ab und ist für die erwähnten Fehler unterschiedlich. So bewirkt die fehlerhafte Nordung immer den gleichen Offset, während bei einer falsch angenommenen Position der Offset von der Relativposition zwischen Sensor und Ziel, bei den in Zusammenhang mit der Wellenausbreitung stehenden Azimutfehlern vom Betrachtungswinkel und der Struktur des Ziels sowie dem Gelände zwischen Sensor und Ziel und bei einem Offset im Zeitstempel von der Tangentialgeschwindigkeit abhängt.

Bei einer weiteren bevorzugten Ausführungsform umfasst nun die Zielfunktion für die numerische Optimierung eine Funktion, die Sensordaten desselben Sensors verknüpft, die verschiedene Zeitpunkte repräsentieren, wobei die Funktion derart definiert ist, dass gleichbleibende Einflüsse systematischer Fehler auf die Sensordaten der verschiedenen Zeitpunkte in der numerischen Optimierung präferiert werden.

Auf diese Weise lassen sich systematische Fehler auch auf einfache Weise handhaben.

Es wird die Tatsache ausgenützt, dass sich die oben beschriebenen Rahmenbedingungen innerhalb einer Antennenumdrehung von ca. einer Sekunde nur unwesentlich ändern. Dies bedeutet, dass der durch die systematischen Fehler hervorgerufene Anteil am Azimutfehler zweier aufeinanderfolgender Echos des gleichen Ziels annähernd gleich ist. Bei der Differenz dieser beiden Fehler entfällt dieser Anteil systematischer Fehler, und es verbleibt eine Differenz zweier zufälliger Fehler, welche bei einer angenommen Normalverteilung eine Breite von

$$\sigma_{12} = \sqrt{\sigma_1{}^2 + \sigma_2{}^2} = \sqrt{2} \cdot \sigma_z,$$

hat, wobei $\sigma_1 = \sigma_2 = \sigma_z$ der zufällige Fehler einer Einzelmessung ist. In der Regel ist $\sigma_{12}$ in der Praxis wesentlich kleiner als der Gesamtfehler (d.h inkl. systematischer Fehler).

Bei einer Parameteranpassung, bei der mehrere Daten des gleichen Sensors miteinbezogen werden, kann nun insbesondere wie folgt vorgegangen werden, wobei ausgewählte Paare von Sensordaten (z.B. unmittelbar aufeinanderfolgende Werte) herangezogen werden:

1. Abfrage der Zielpositionen $\vec{x}_1$ und $\vec{x}_2$ zu den Gültigkeitszeitpunkten $t_1$ und $t_2$ von den Sensordaten 1 und 2

2. Berechnung der entsprechenden Azimutwerte: $\vec{x}_1 \rightarrow \alpha_1$, $\vec{x}_2 \rightarrow \alpha_2$

3. Berechnung der Abweichungen von den Azimut-Messwerten $A_1$ und $A_2$:

$$\Delta A_i = A_i - \alpha_i$$

4. Berechnung der Differenz dieser Abweichungen: X = $\Delta A_1 - \Delta A_2$

5. Berechnung eines Kostenterms der Zielfunktion (z.B. eine Normalverteilung mit $\sigma_{12}$, siehe oben, bzw. der negative Logarithmus davon, je nach Definition der Zielfunktion)

Dieser Kostenterm kann z.B. immer bei der Berechnung des herkömmlichen Kostenterms des zweiten Sensordatums hinzuaddiert werden. Alternativ kann ein spezielles Datenobjekt für die paarweise Betrachtung von Sensordaten benutzt werden. Für den ersten Fall muss lediglich die Möglichkeit geschaffen werden, dass ein Datenobjekt durch das Zielmodell Zugriff auf seine Vorgänger-Datenobjekten erhält.

Am Beispiel wurde die Berücksichtigung der systematischen Azimutfehler gezeigt. Bei den anderen Komponenten und den Kovarianzen kann analog verfahren werden. Es können ferner auch mehr als zwei Sensor-Datenobjekte desselben Sensors (d. h. mehr als zwei Zeitpunkte) herangezogen werden. Die Parameter der Zielfunktion können gleich wie die Parameter der herkömmlichen Dichtefunktionen durch die statistische Auswertung von Radardaten mit einer (z. B. durch GPS-Tracker) bekannten Zielposition bestimmt werden, indem auf ähnliche Weise wie beim Betrieb des Verfahrens Messwerte paarweise miteinander verglichen werden.

Alternativ oder zusätzlich können systematische Fehler auch in an sich bekannter Weise statistisch berücksichtigt werden.

Mit Vorteil wird zum Berechnen der Übereinstimmungswerte den betroffenen Datenobjekten jeweils eine Referenz zum jeweiligen Modellobjekt übergeben, so dass die Daten des Modellobjekts für die Validierungsfunktion (und gegebenenfalls die Parameteranpassungsfunktion) des Datenobjekts zugreifbar sind. Dies vereinfacht die Implementierung des Verfahrens und kann das zu verarbeitende Datenaufkommen stark reduzieren. Ferner hat diejenige Programmroutine, welche die Sensordaten auswertet und die entsprechenden Datenobjekte bereitstellt, jeweils vollen Zugriff auf die Informationen des Modellobjekts, sie kann somit genau die für den entsprechenden Sensor relevanten (Orts-)Koordinaten sowie weitere Informationen, wie z. B. eine maximal aufgetretene Geschwindigkeit und/oder Beschleunigung, eine Ortskurve u.s.w., abfragen. Die weiteren Informationen sind beispielsweise nützlich, wenn eine Zuordnung eines Modellobjekts zu einem bestimmten Objekttyp erfolgen soll oder wenn zu prüfen ist, ob die modellierte Ortskurve durch unrealistische Bereiche verläuft.

Alternativ ist es möglich, die von den Datenobjekten benötigten Informationen (Parameter der Parametrisierung, Funktionswerte u.s.w.) als Werte den Datenobjekten zu übergeben.

Bevorzugt umfassen die Modellobjekte weitere Parameter, welche Eigenschaften des modellierten Objekts beschreiben, insbesondere einen Objekttyp repräsentieren und/oder physikalische Eigenschaften des Objekts angeben.

Dadurch ermöglichen das erfindungsgemässe Verfahren und die erfindungsgemässe Anordnung nicht nur die Ermittlung von Trajektorien, sondern auch beispielsweise die Zuordnung der überwachten physischen Objekte zu bestimmten Klassen (z. B. Kampfjet, Hubschrauber, Propellerflugzeug; Personenwagen, Lastwagen, Motorrad u.s.w.) oder die Ermittlung anderer Eigenschaften der physischen Objekte (z. B. der räumlichen oder flächigen Ausdehnung, des $c_w$-Werts oder der Sichtbarkeit für eine bestimmte Klasse von Sensoren). Diese Parameter fliessen in die Modellierung der Trajektorie ein und/oder werden bei der Auswertung der Validierungsfunktion berücksichtigt.

Bevorzugt wird für die numerische Optimierung des Übereinstimmungswerts eine Konditionierung der Zielfunktion der Optimierung vorgenommen. Dazu wird die Parameteranpassungsfunktion mindestens eines der ersten Datenobjekte derart modifiziert, dass unabhängig von der unmodifizierten Parameteranpassungsfunktion ein Gradient der modifizierten Parameteranpassungsfunktion ausser in einem Bereich des Parameterraums, welcher einem räumlichen Gebiet entspricht, das den anhand des Datenobjekts erwarteten Ort umgibt, einen Betrag in einem vorgegebenen Bereich aufweist.

Der Parameterraum ist nicht auf Ortskoordinaten eingeschränkt sondern kann zusätzliche Koordinaten, z. B. Geschwindigkeitskoordinaten, umfassen. Entsprechend liegt der erwähnte Bereich in einem Gebiet des Parameterraums, das denjenigen Punkt oder diejenige Region des Parameterraums umgibt, der bzw. die dem anhand des Datenobjekts erwarteten Ort und der anhand des Datenobjekts erwarteten Geschwindigkeit entspricht. Das Gebiet des Parameterraums lässt sich grundsätzlich wahlweise sowohl in den Parameterkoordinaten des Modellobjekts als auch in Orts- und gegebenenfalls Geschwindigkeitskoordinaten (z. B. gemäss den Sensordaten des Datenobjekts) definieren. Üblicherweise werden die einander entsprechenden Gebiete jeweils zusammenhängend sein.

Es hat sich gezeigt, dass sich aus der konditionierten Zielfunktion einfacher bzw. überhaupt zusätzliche Informationen zur Güte der Optimierung gewinnen lassen. Z. B. lässt sich im Rahmen des eingangs erwähnten Verfahrens zur Bestimmung von Trajektorien beweglicher physischer Objekte feststellen, dass die Zuordnungen zu überprüfen sind, weil keine eindeutige Situation vorliegt. Ohne Konditionierung ist diese Information der Zielfunktion kaum oder nur sehr schwer entnehmbar.

Mit Vorteil umfasst die Konditionierung folgende Schritte:

a) Abschneiden einer unmodifizierten Parameteranpassungsfunktion entlang einer Grenzfläche, welche einer unteren Grenze einer Aufenthaltswahrscheinlichkeit entspricht;

b) Ergänzen der resultierenden Funktion durch eine Hilfsfunktion, so dass der Gradient der modifizierten Parameteranpassungsfunktion ausser in einem Bereich innerhalb der Grenzfläche den Betrag im vorgegebenen Bereich aufweist.

Mit Vorteil ist die modifizierte Parameteranpassungsfunktion an Orten, bei denen sich zum betrachteten Zeitpunkt anhand des Datenobjekts mit hoher Wahrscheinlichkeit ein Objekt aufgehalten hat, bis auf einen ersten konstanten Term im Wesentlichen proportional zum Logarithmus einer Aufenthaltswahrscheinlichkeit am entsprechenden Ort. Bevorzugt ist die modifizierte Validierungsfunktion zudem an Orten mit geringer Aufenthaltswahrscheinlichkeit bis auf einen zweiten konstanten Term zumindest annähernd proportional zum Abstand zwischen dem Ort und einem Ort mit einer grössten Aufenthaltswahrscheinlichkeit. Wiederum kann die Aufenthaltswahrscheinlichkeit am entsprechenden Ort verallgemeinert auch die Wahrscheinlichkeit einer gewissen (skalaren oder vektoriellen) Geschwindigkeit des Objekts einschliessen.

Qualitativ hat die Konditionierung zur Folge, dass in einem Bereich um die wahrscheinlichsten Werte der Parameter die konditionierte Funktion (insbesondere deren Minima) dem Logarithmus einer Aufenthaltswahrscheinlichkeit entspricht, während ausserhalb dieses Bereichs die Funktion im Wesentlichen linear ist in Bezug auf einen (verallgemeinerten) Abstand vom Ort der höchsten Aufenthaltswahrscheinlichkeit. Vereinfacht gesprochen und der Anschaulichkeit halber in zwei Dimensionen betrachtet wird also die ursprüngliche Parameteranpassungsfunktion in einer gewissen Entfernung vom erwarteten Minimum "abgeschnitten" und ausserhalb der Schnittfläche durch einen stetig an die Schnittfläche angesetzten "Trichter" ersetzt.

In einer bevorzugten Ausführungsform stellt die modifizierte Parameteranpassungsfunktion im Bereich des Parameterraums, welcher dem räumlichen Gebiet entspricht, das den anhand des Datenobjekts erwarteten Ort umgibt, eine quadratische Form der numerisch zu optimierenden Parameter der Parameteranpassungsfunktion dar. Ausserhalb dieses Bereichs ist der Betrag des Gradienten der modifizierten Parameteranpassungsfunktion mit wachsender Distanz zum Bereich konstant oder monoton fallend.

Die Distanz bezieht sich auf den Parameterraum und ergibt sich anhand einer geeigneten Metrik. Sie kann beispielsweise durch die Wurzel der quadratischen Form gegeben sein.

Vorzugsweise ist die modifizierte Parameteranpassungsfunktion $P_{\mathrm{mod}}(\vec{x})$ für die Konditionierung der Zielfunktion wie folgt aufgebaut:

$$P_{\mathrm{mod}}(\vec{x}) = R(\vec{x}) + \frac{1}{W}\sqrt{-\log(PDF'(\vec{x}))}\,,$$

Dabei ist $PDF'(\vec{x})$ eine Wahrscheinlichkeitsdichtefunktion mit geeigneter Normierung, die insbesondere so gewählt ist, dass für alle $\vec{x}$ gilt $PDF'(\vec{x}) \le 1$. Für $R(\vec{x})$ gilt folgendes:

a) innerhalb des Bereichs des Parameterraums, welcher dem räumlichen Gebiet entspricht, das den anhand des Datenobjekts erwarteten Ort umgibt, ist $R(\vec{x})$ proportional zu - $\log(PDF'(\vec{x}))$;
b) ausserhalb des Bereichs des Parameterraums, welcher dem räumlichen Gebiet entspricht, das den anhand des Datenobjekts erwarteten Ort umgibt, ist $R(\vec{x})$ konstant.

$W$ ist ein vorgebbarer Parameter. Er definiert die Steigung der Gesamtfunktion im äusseren "Trichterbereich". Er wird im Hinblick auf die numerische Optimierung so gewählt, dass der Funktionswert der Zielfunktion im gesamten betrachteten Gebiet in einem vorgegebenen Bereich bleibt. Dadurch kann die zur Verfügung stehende Fliesspunkt-Genauigkeit optimal ausgenutzt werden. Es wird vermieden, dass aufgrund hoher Funktionswerte der minimal erfassbare Abstand zweier Funktionswerte vergrössert werden muss. Etwas vereinfacht ausgedrückt wird vermieden, dass Nachkommastellen aufgrund benötigter Vorkommastellen geopfert werden müssen.

Ein mögliches Kriterium für den Wert von *W* ist $\frac{1}{W}\sqrt{-\log(PDF'(\vec{x}))} \leq S^2$ für alle $\vec{x}$ innerhalb des Überwachungsraums.

Alternativ wird ein geringster Ortsabstand (z. B. 1 cm) vorgegeben, welcher noch eine Änderung im Funktionswert im Rahmen der Fliesskomma-Genauigkeit bewirken soll. Dies definiert ebenfalls die Steigung im "Trichterbereich" und damit den Wert des Parameters *W*.

Die Funktion $R(\vec{x})$ ist mit Vorteil wie folgt definiert:

$$R(\vec{x}) = -2\log(PDF'(\vec{x})), \text{ für } -2\log(PDF'(\vec{x})) < S^2$$

und

$$R(\vec{x}) = S^2 \text{ für } -2\log(PDF'(\vec{x})) \geq S^2,$$

wobei *S* ein vorgebbarer Parameter ist. S ist ein Mass für die Ausdehnung des inneren Bereichs, in welchem die modifizierte Parameteranpassungsfunktion $P_{\mathrm{mod}}(\vec{x})$ vom Term dominiert wird, welcher proportional ist zu $-\log(PDF'(\vec{x}))$. Falls die Wahrscheinlichkeitsdichtefunktion einer (multivariaten) Normalverteilung entspricht,

$$PDF(\vec{x}) = \frac{1}{(2\pi)^{\frac{p}{2}}|\Sigma|^{\frac{1}{2}}}\exp\left\{-\frac{1}{2}(\vec{x}-\vec{\mu})^T\Sigma^{-1}(\vec{x}-\vec{\mu})\right\},$$

so ist

$$PDF'(\vec{x}) = \exp\left\{-\frac{1}{2}(\vec{x}-\vec{\mu})^T\Sigma^{-1}(\vec{x}-\vec{\mu})\right\}$$

und die Konditionierung ist so definiert, dass der Wert von S gerade die Anzahl Standardabweichungen der multivariaten Normalverteilung angibt, welcher der Abstand der Grenzfläche zwischen innerem und äusserem Bereich vom erwarteten Minimum entspricht. Wird für S beispielsweise der Wert 3 gewählt, erfolgt das Abschneiden in einer Entfernung von 3σ. Es ist zu beachten, dass das Schnittkriterium generalisiert werden kann, insbesondere indem der Wert *S* abhängig ist von einem Winkel im Parameterraum, es sind entsprechend für verschiedene Parameter verschiedene Werte von S wählbar.

Nicht alle in der Zielfunktion berücksichtigten Parameteranpassungsfunktionen müssen auf dieselbe Weise konditioniert werden. Beispielsweise reicht es aus, wenn nur bei einer der in die Optimierung einbezogenen Parameteranpassungsfunktionen der Trichterterm addiert wird, während bei allen anderen Parameteranpassungsfunktionen lediglich das Abschneiden vorgenommen wird.

Ferner kann die Konditionierung auf eine andere Weise vorgenommen werden. So kann der Trichterterm auch im Modell-Parameterraum statt im Sensordatenraum definiert werden. Dessen Nullpunkt ist gegeben durch den Ort im Parameterraum, welcher durch die Modellparameter a bestimmt ist. Eine derartige Konditionierung ist somit insbesondere dann sinnvoll, wenn bereits aussagekräftige Parameter ermittelt wurden, z. B. auf der Basis früher empfangener Sensordaten.

Die Parameter *S* und *W* können im Rahmen des Verfahrens veränderbar sein und zwar je nach Bedürfnissen manuell durch einen Benutzer und/oder automatisch anhand entsprechender Algorithmen. Weiter unten ist dargestellt, inwiefern eine solche Veränderbarkeit Vorteile bietet.

Mit Vorteil erfolgt die numerische Optimierung durch eines der folgenden Verfahren:

i. ein Downhill-Simplex-Verfahren;

ii. ein gradientenbasiertes Verfahren.

Bei diesen Verfahren ist die vorher beschriebene Konditionierung zusätzlich von Vorteil, als durch sie eine Zielfunktion geschaffen wird, die sich im gesamten von den Optimierungsverfahren erfassten Parameterbereich wertemässig nur über einen eingeschränkten Bereich erstreckt. Die unkonditionierte Funktion kann sich jedoch über einen viel grösseren Wertebereich erstrecken, weil sie beispielsweise für unrealistische Parameterkombinationen stark anwächst (z. B. im Wesentlichen quadratisch mit zunehmendem Abstand vom erwarteten Parameterbereich). Dies hat zur Folge, dass im Rahmen einer vorgegebenen Fliesskomma-Genauigkeit eine höhere minimale Schrittweite resultiert, was dazu führen kann, dass das Optimierungsverfahren weniger effizient arbeitet, ein weniger genaues Ergebnis liefert oder gar an der Optimierungsaufgabe scheitert.

Es ist zu beachten, dass die vorstehend beschriebene Konditionierung der Zielfunktion nicht auf den Einsatz im eingangs beschriebenen Verfahren zur Bestimmung von Trajektorien beweglicher physischer Objekte beschränkt ist. Es lässt sich vielseitig einsetzen, um die Analyse des Parameterraums und/oder das Verhalten einer Optimierungsfunktion zu verbessern. Die Konditionierung ist insbesondere dann wirkungsvoll, wenn sich aus den einzelnen Datenobjekten, deren Parameteranpassungsfunktion konditioniert wird, bereits Hinweise in Bezug auf einen wahrscheinlichen Bereich im Parameterraum ergeben. Durch die Konditionierung wird die Information in diesem Bereich bewahrt, während sie ausserhalb des Bereichs, der unrealistischen Parameterkombinationen entspricht, durch eine einfacher handhabbare, die Minimierung weniger beeinflussende und die Optimierung vereinfachende Funktion ersetzt wird.

Generell ist also ein Verfahren nützlich, bei welchem für die numerische Optimierung des Übereinstimmungswerts eine Konditionierung der Zielfunktion der Optimierung vorgenommen wird, indem eine in die Zielfunktion einfliessende Parameteranpassungsfunktion derart modifiziert wird, dass unabhängig von der unmodifizierten Parameteranpassungsfunktion ein Gradient der modifizierten Parameter¬anpassungs¬funktion ausser in einem Bereich des Parameterraums, welcher einem Gebiet des Parameterraums entspricht, das die erwartete Parameterkombination umgibt, einen Betrag in einem vorgegebenen Bereich aufweist.

Mit Vorteil weist die Anordnung eine Sensorstation auf, welche folgendes umfasst:

a) mindestens einer der Sensoren zur Erfassung der Objekte im Raum; und

b) das erste Verarbeitungsmodul zum Erzeugen von ersten Datenobjekten ausgehend von den Sensordaten, wobei jedes erste Datenobjekt mindestens eine Zeitangabe und eine Ortsangabe des von dem mindestens einen Sensor erfassten Objekts sowie eine Validierungsfunktion umfasst.

Die Sensorstation liefert also nicht nur Rohdaten, sondern insbesondere auch die Validierungsfunktion, welche im Rahmen der Zuordnung der Modellobjekte herangezogen wird. Die Auswertung der Validierungsfunktion kann insbesondere innerhalb der Sensorstation erfolgen, so dass technische Details wie die spezifische Form der Validierungsfunktion weder zentral gespeichert, noch über ein Netzwerk übertragen werden müssen. Eine zentrale Stelle, welche die Daten mehrerer Sensorstationen auswertet, muss zudem nicht individuelle Funktionen oder Einstellungen für die einzelnen Stationen beschaffen oder vorhalten. Eine derartige Sensorstation mit Mitteln zum Erzeugen von Datenobjekten, die neben einer Zeit- und Ortsangabe auch eine Validierungsfunktion umfassen, ist aufgrund der genannten Vorteile auch in Anordnungen zur Bestimmung von Trajektorien beweglicher physischer Objekte in einem Raum vorteilhaft, die nicht alle die vorstehend aufgeführten Verarbeitungsmodule umfassen.

Die Verarbeitungsstation umfasst somit mit Vorteil folgendes:

a) das zweite Verarbeitungsmodul zum Bereitstellen des mindestens einen Modellobjekts;

b) das dritte Verarbeitungsmodul zum Berechnen des Übereinstimmungswerts;

c) das vierte Verarbeitungsmodul zum Bereitstellen des zusätzlichen Modellobjekts;

d) das fünfte Verarbeitungsmodul zum Zuordnen eines der Datenobjekte zu mindestens einem der Modellobjekte; und

e) das sechste Verarbeitungsmodul zur numerischen Optimierung der Zielfunktion, wobei die Anordnung weiter ein Netzwerk zur Verbindung der Sensorstation mit der Verarbeitungsstation umfasst.

Die Aufteilung der einzelnen Module auf die verschiedenen Standorte und Stationen kann auch anders gewählt werden. Generell kann die Verarbeitung der Daten zentral, in einer einzigen Verarbeitungsstation, stattfinden. Es ist aber auch möglich, mehrere Verarbeitungsstationen vorzusehen, z. B. indem einzelne oder alle Sensoren mit einer Verarbeitungsstation kombiniert sind, welche z. B. die von dem Sensor erfassten Daten vorverarbeitet.

Die Menge der zwischen der Verarbeitungsstation und den Sensorstationen auszutauschenden Daten kann verringert werden, indem die Validierungsfunktion und insbesondere die Parameteranpassungsfunktion durch eine Taylor-Entwicklung angenähert werden. Für die Parameteranpassungsfunktion gilt, dass die konstanten Terme ohne Bedeutung sind und weggelassen werden können. Wenn mit Normalverteilungen gearbeitet wird, sind die Terme ab dritter Ordnung Null, und auch bei anderen Verteilungen sind die Terme höherer Ordnung von untergeordneter Bedeutung.

Für einen gegebenen Ausgangspunkt $\vec{x}_0$ im Referenzkoordinatensystem hat die Parameteranpassungsfunktion des Datenobjekts $i$ somit die Form

$$P_i(d\vec{x}) = \frac{1}{2}(d\vec{x}^T A_i d\vec{x}) + \vec{b}_i \cdot d\vec{x} \text{, mit } d\vec{x} := \vec{x} - \vec{x}_0 \,.$$

Für die Zielfunktion gilt also

$$Q(d\vec{x}) = \sum P_i(d\vec{x}) = \frac{1}{2}(d\vec{x}^T A d\vec{x}) + \vec{b} \cdot d\vec{x} \text{ mit } A := \sum_i A_i \text{ und } b := \sum_i b_i \,.$$

Somit müssen $A$ und $b$ nur einmal pro Parameteranpassung berechnet werden, Q hat zudem stets dieselbe einfache Form, unabhängig davon, wie viele Datenobjekte berücksichtigt werden: Bei Q handelt es sich um eine quadratische Form, welche mit der Methode der konjugierten Gradienten sehr effizient minimiert werden kann.

Bei jeder Parameteranpassungen müssen also von den Datenobjekten nur einmal die Matrix $A$ und der Vektor $b$ berechnet und übermittelt werden, wodurch sich das Datenaufkommen massiv verringern lässt.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1        Eine schematische Übersicht über eine erfindungsgemässe Anordnung zur Bestimmung von Trajektorien beweglicher physischer Objekte in einem Raum;

Fig. 2        ein Flussdiagramm zur Illustration des Ablaufs des erfindungsgemässen Verfahrens zur Bestimmung von Trajektorien nach Eingang neuer Sensordaten;

Fig. 3        eine schematische Darstellung der Bestimmung von Trajektorien;

Fig. 4        ein Blockdiagramm, welches die Wechselwirkung zwischen einem Datenobjekt und Modellobjekten bei der Zuordnung des Datenobjekts zu einem der Modellobjekte illustriert;

Fig. 5A, B    Blockdiagramme, welches die Wechselwirkung zwischen einem Modell- und den diesem zugeordneten Datenobjekten bei der Berechnung der Zielfunktion für die numerische Optimierung illustrieren;

Fig. 6        die Darstellung eines vereinfachten Beispiels zur Darstellung des Ablaufs des erfindungsgemässen Verfahrens;

Fig. 7A, B    eine Darstellung der Zielfunktion mit und ohne Konditionierung der Parameteranpassungsfunktionen; und

Fig. 8A-C     eine schematische Darstellung der Berücksichtigung von Reflektionen.

Grundsätzlich sind in den Figuren gleiche Teile mit gleichen Bezugszeichen versehen.

## Wege zur Ausführung der Erfindung

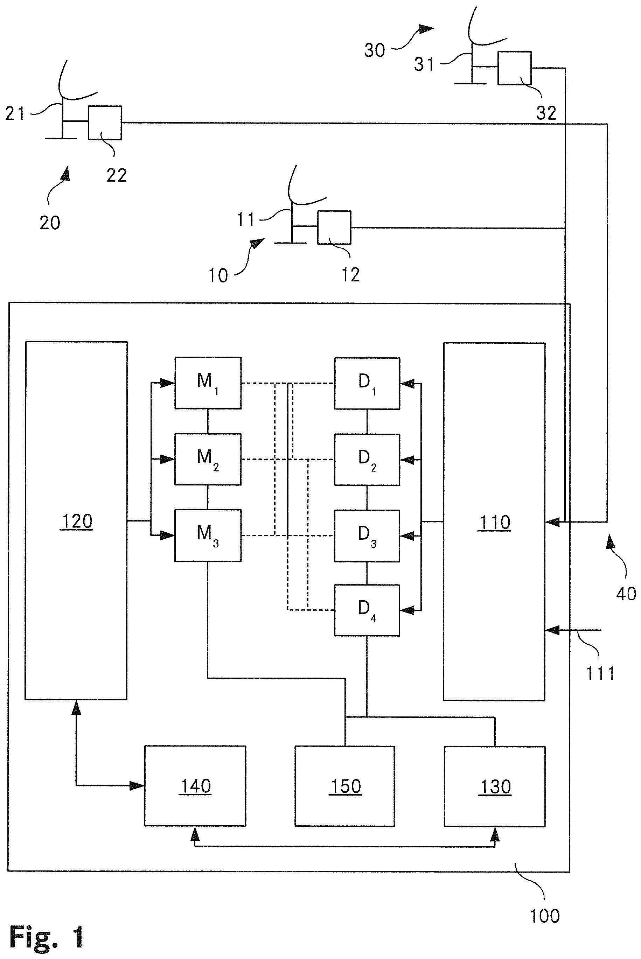

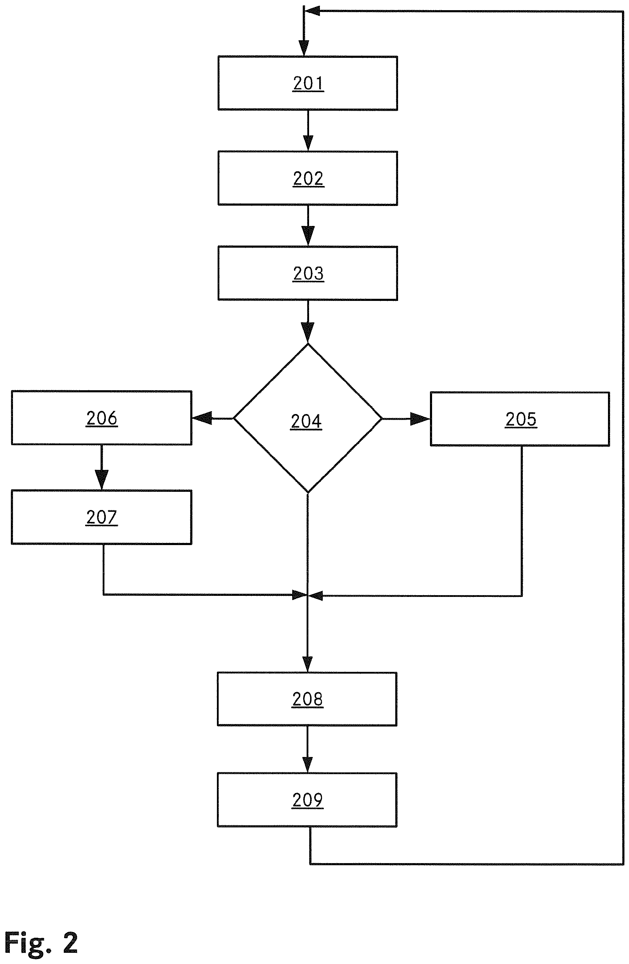

Die Figur 1 ist eine schematische Übersicht über eine erfindungsgemässe Anordnung zur Bestimmung von Trajektorien beweglicher physischer Objekte in einem Raum. Es handelt sich dabei um eine Anordnung zur Ermittlung der aktuellen Luftlage auf der Basis von Radardaten. Die Figur 2 ist ein Flussdiagramm, welches die Schritte des erfindungsgemässen Verfahrens zur Bestimmung von Trajektorien zeigt, welche nach Eingang neuer Sensordaten zum Ablauf gebracht werden.

Die Anordnung umfasst mehrere Sensorstationen 10, 20, 30 mit jeweils einem Suchradar 11, 21, 31 und einer Verarbeitungseinrichtung 12, 22, 32. Die Sensorstationen 10, 20, 30 sind über ein Netzwerk 40 mit einer zentralen Auswertestation 100 verbunden. Das Netzwerk 40 kann im Prinzip beliebige Verbindungen umfassen, wie z. B. Kupfer- oder Glasfaserkabel, Richtstrahl- oder andere Funkverbindungen. Die Daten zwischen den Sensorstationen 10, 20, 30 und der zentralen Auswertestation 100 können auch ganz oder teilweise über bestehende Netze wie Mobilfunknetze, Telefon-Festnetze, das Internet u.s.w. übertragen werden.

Die zentrale Auswertestation 100 umfasst Schnittstellen zum Datenaustausch mit den Sensorstationen 10, 20, 30, mindestens einen Rechner, auf welchem ein Programm zum Ablauf gebracht wird, welches die nachfolgend dargestellten Funktionalitäten bereitstellt, und Ausgabemittel für die Weitergabe, Speicherung oder Darstellung der Ergebnisse der Auswertung, z. B. Bildschirme, Drucker, Massenspeicher, Netzwerkschnittstellen u.s.w. Ferner sind Eingabemittel zur Steuerung der Auswertung und der Datenausgabe sowie zur Eingabe zusätzlicher Informationen vorhanden, z. B. eine Tastatur, ein Touchscreen, andere Eingabegeräte oder (weitere) Netzwerkschnittstellen.

Das in der Figur 1 gezeigte Blockbild der zentralen Auswertestation 100 ist an der Funktion derselben orientiert. Die dargestellten Module und Objekte und die Verbindungen dazwischen entsprechen in der Regel nicht der Hardware-Architektur der Auswertestation 100. Letztere kann beispielsweise durch einen im Handel erhältlichen Server realisiert sein, auf welchem Computerprogramme zum Ablauf gebracht werden, welche die beschriebenen Funktionalitäten zur Verfügung stellen.

Die zentrale Auswertestation 100 umfasst ein erstes Erzeugungsmodul 110 zum Erzeugen von Datenobjekten $D_1...D_4$. Dazu empfängt es Informationen von den Sensorstationen 10, 20, 30 aber auch aus weiteren Quellen über den Eingang 111 (Schritt 201). Beim dargestellten Ausführungsbeispiel werden die Messdaten der Suchradare 11, 21, 31 von den Verarbeitungseinrichtungen 12, 22, 32 bereits derart verarbeitet, dass pro detektiertes Objekt nebst einer Zeitangabe t der entsprechenden Messung jeweils ein Azimut $\varphi$ und eine Distanz r als Ortsangabe von der Sensorstation 10, 20, 30 ausgegeben werden. Die Ortsangabe als Kombination von Azimut $\varphi$ und Distanz r wird im Folgenden auch mit d (für Sensordatum) bezeichnet.

Das Erzeugungsmodul 110 erzeugt Datenobjekte $D_1...D_4$ (Schritt 202). Diese repräsentieren entweder Sensordaten, d. h. die von den Sensorstationen 10, 20, 30 erhaltenen Zeit- und Ortsangaben *t, d,* oder externe Daten, wie Topgraphiedaten, Bedingungen für gültige Trajektorien oder generell weitere Daten, die für die Ermittlung der Luftlage von Bedeutung sind und nicht den von den Sensorstationen 10, 20, 30 gelieferten Zeit- und Ortsangaben *t, d* entsprechen. Generell umfassen diejenigen Datenobjekte $D_1...D_4$, welche Sensordaten repräsentieren, zusätzlich auch Sensorparameter (z. B. den Ort der Sensorstation 10, 20, 30, eine Geschwindigkeit bei mobilen Stationen u.s.w.). Weiter umfasst jedes Datenobjekt $D_1...D_4$ eine Validierungsfunktion. Bei den Datenobjekten $D_1...D_4$, welche Sensordaten umfassen, wird von einer Wahrscheinlichkeitsdichtefunktion *PDF(x, $t_i$, $d_i$, $k_i$)* ausgegangen, welche die Messcharakteristik der entsprechenden Sensorstation 10, 20, 30 repräsentiert. Sie ordnet also zu einem gegebenen Zeitpunkt t jedem Ort x die Wahrscheinlichkeitsdichte für den Aufenthalt des vom Sensordatum *t, d* repräsentierten Objekts an diesem Ort zu. Die Parameter k betreffen Eigenschaften des Sensors, von welchem das Sensordatum stammt, z. B. dessen Standort, Messgenauigkeiten u.s.w. Aus der Sensorposition und dem gemessenen Azimut $\varphi$ und der Distanz $r$ ergibt sich ein Kreisbogen. Die Wahrscheinlichkeitsdichtefunktion besitzt nun beispielsweise ein Maximum an einem Ort, welcher auf diesem Kreisbogen liegt und dessen Elevation der maximalen Empfindlichkeit des entsprechenden Suchradars 11, 21, 31 entspricht. Ausgehend von diesem Punkt nimmt die Wahrscheinlichkeitsdichte beispielsweise gemäss einer multivariaten Normalverteilung ab, wobei die Funktion in verschiedenen Richtungen (Radius, Azimut, Elevation) in der Regel eine unterschiedliche Breite aufweisen wird. Um der Sensorcharakteristik möglichst gerecht zu werden, kann die Verteilung in einer, mehreren oder allen Dimensionen von einer Normalverteilung abweichen, z. B. kann die Wahrscheinlichkeitsverteilung in Abhängigkeit der Elevation anders definiert sein.

Die Wahrscheinlichkeitsdichtefunktion hat im Wesentlichen die Form

$$PDF'(x, t_i, d_i, k_i) = \exp(-\frac{1}{2} L(x, t_i, d_i, k_i)),$$

wobei die Funktion so normiert ist, dass sie im Maximum den Wert 1 annimmt.

Die Validierungsfunktion des Datenobjekts $D_i$ wird dann beispielsweise wie folgt definiert:

$$V_i(x, t) = \sqrt{L_i(x, t)}.$$

Die zentrale Auswertestation 100 umfasst weiter ein zweites Erzeugungsmodul 120 zum Erzeugen und Aktu-

alisieren von Modellobjekten $M_1...M_3$. Jedes der Modellobjekte $M_1...M_3$ repräsentiert eine Parametrisierung einer Trajektorie eines beweglichen Objekts. Es umfasst dazu mindestens einen (in der Regel mehrere) Parameter *a*. Bei der Parametrisierung handelt es sich insbesondere um eine Ortsfunktion, die in Abhängigkeit der Zeit und zumindest eines Teils der Parameter den Ort des modellierten Objekts zur angegebenen Zeit zurückgibt. Weitere Parameter können Eigenschaften des modellierten Objekts beschreiben, welche nicht in die Ortsfunktion einfliessen, für die Zuordnung zu den einzelnen Modellen aber trotzdem von Bedeutung sind, z. B. die Klasse (z. B. Flugobjekt, Landfahrzeug, unbewegtes Objekt), den Typ (z. B. Kampfjet, Passagierflugzeug, Hubschrauber) oder eine Identifikation des Objekts (z. B. Freund, Feind, durch Lotsen gesteuert, selbständig u.s.w.).

Weiter umfassen die Modellobjekte $M_1...M_3$ Referenzen zu einem oder mehreren Datenobjekten $D_1...D_4$. Dies ist durch die gestrichelten Linien zwischen den Modellobjekten $M_1...M_3$ und den Datenobjekten $D_1...D_4$ angedeutet.

Die zentrale Auswertestation 100 umfasst weiter ein Berechnungsmodul 130 zum Berechnen eines Übereinstimmungswerts für eine Zuordnung des Datenobjekts zu mindestens einem der bereitgestellten Modellobjekte (Schritt 203). Dazu wird die Validierungsfunktion $V_i(x, t)$ des Datenobjekts $D_i$ für das jeweilige Modellobjekt $M_k$ ausgewertet. Dies bedeutet, dass gemäss der Ortsfunktion des Modellobjekts $M_k$ der Ort x des Objekts zum Zeitpunkt t bestimmt wird. Die Aufenthaltswahrscheinlichkeit des detektierten und durch das Datenobjekt $D_i$ repräsentierten Objekts an diesem Ort fliesst durch die Wahrscheinlichkeitsdichtefunktion in der Validierungsfunktion des Datenobjekts $D_i$ in das Ergebnis der Validierungsfunktion ein. Folglich ist der Wert der Validierungsfunktion, der sog. Übereinstimmungswert $V_{ik}$, eine Angabe darüber, wie wahrscheinlich es ist, dass das Modellobjekt $M_k$ demjenigen Objekt entspricht, welches vom Datenobjekt $D_i$ repräsentiert wird. Im vorliegenden Fall deutet aufgrund der Definition der Validierungsfunktion $V_i(x,t)$ ein tiefer Wert auf eine hohe Wahrscheinlichkeit der entsprechenden Zuordnung hin.

Die zentrale Auswertestation 100 umfasst weiter ein Entscheidungsmodul 140, welches aufgrund der vom Berechnungsmodul 130 berechneten Übereinstimmungswerte entscheidet, welches Modellobjekt $M_1...M_3$ einem bestimmten Datenobjekt $D_i$ zugewiesen werden soll oder ob das zweite Erzeugungsmodul 120 ein neues Modellobjekt $M_j$ bereitstellen soll (Entscheidung 204). Beispielsweise wird diese Entscheidung wie folgt getroffen (*k=1...m*):

a. min $(V_{ik})$ < $V_{min}$: Zuordnung des Modellobjekts k mit $V_{ik}$ = min $(V_{ik})$ (Schritt 205);

b. min $(V_{ik}) \geq V_{min}$: Erzeugung eines neuen Modellobjekts $M_{m+1}$ (Schritt 206), Zuordnung dieses neuen Modellobjekts $M_{m+1}$ (Schritt 207).

Dabei bezeichnet min $(V_{i_k})$ den minimalen Wert der Validierungsfunktion über die getesteten Modelle k=1...m und $V_{min}$ eine untere Grenze, die unterschritten werden muss, damit eine Zuordnung zu einem bereits bestehenden Objekt vorgenommen werden kann.

Die Zuordnung eines Modellobjekts zu einem Datenobjekt erfolgt dadurch, dass dem Modellobjekt eine Referenz auf das entsprechende Datenobjekt zugefügt wird, d. h. das Modellobjekt wird durch das zweite Erzeugungsmodul 120 entsprechend aktualisiert.

Die zentrale Auswertestation 100 umfasst weiter ein Optimierungsmodul 150. Dieses optimiert eine Zielfunktion Q, die letztlich ein Mass ist für die Abweichungen der von den Datenobjekten $D_i$ repräsentierten Messwerte von der parametrisierten Trajektorie des Modells $M_k$. Dazu wird im vorliegenden Ausführungsbeispiel folgender Term betrachtet:

$$Q = \sum_i P_{ik} \, ,$$

wobei $P_{ik}$ eine geeignete Parameteranpassungsfunktion bezeichnet. Die Summe erstreckt sich dabei über alle Datenobjekte, welchen das Modellobjekt $M_k$ zugeordnet ist, d. h. über alle Datenobjekte, deren Referenz im Modellobjekt $M_k$ gespeichert ist. Die Minimierung des Terms Q erfolgt gemäss Ausführungsbeispiel durch Variation der Parameter *a* des Modellobjekts mittels eines Downhill-Simplex-Verfahrens (Schritt 208).

Im einfachsten Fall entspricht die Parameteranpassungsfunktion $P_{ik}$ einfach dem Übereinstimmungswert $V_{ik}$. Bevorzugt wird jedoch eine Konditionierung vorgenommen. Dazu wird gemäss dem Ausführungsbeispiel eine Hilfsfunktion wie folgt definiert:

$$R(x,t) = \begin{cases} L(x,t) & \text{falls} \quad L(x,t) < S^2 \\ S^2 & \text{sonst} \end{cases}$$

Die Funktion $P_{ik}$ ergibt sich dann als

$$P_{ik} = R(x,t) + \frac{V_i(x,t)}{W}.$$

Qualitativ hat die Konditionierung zur Folge, dass in einem Bereich um die wahrscheinlichsten Werte der Orts- und Geschwindigkeitswerte die konditionierte Funktion (insbesondere deren Minima) der ursprünglichen Parameteranpassungsfunktion entspricht, dass aber in einem Bereich des Parameterraums, weicher eine gewisse Entfernung von den wahrscheinlichsten Werten hat, die im wesentlichen quadratische Funktion durch eine lineare Funktion ersetzt wird, nämlich den zweiten Term der Funktion $P_{ik}$. Vereinfacht gesprochen wird also die ursprüngliche Parameteranpassungsfunktion in einer gewissen Entfernung vom erwarteten Minimum "abgeschnitten" und ausserhalb der Schnittfläche durch einen stetig an die Schnittfläche angesetzten "Trichter" ersetzt.

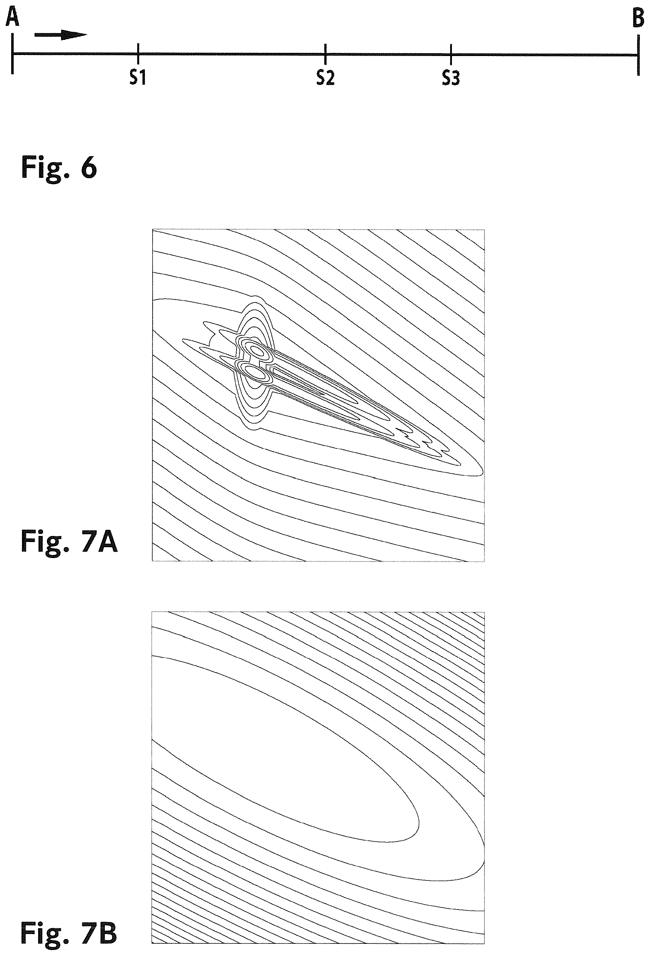

Die Parameter $W$ und $S$ parametrisieren die Konditionierung. S definiert den Abstand der Schnittfläche vom erwarteten Punkt des Parameterraums. Die Konditionierung ist so definiert, dass der Wert von $S$ gerade die Anzahl Standardabweichungen der multivariaten Normalverteilung angibt, welcher der Abstand der Schnittfläche vom erwarteten Minimum entspricht. Wird für S beispielsweise der Wert 3 gewählt, erfolgt das Abschneiden in einer Entfernung von $3\sigma$. Es ist zu beachten, dass das Schnittkriterium generalisiert werden kann, insbesondere indem der Wert S abhängig ist von einem Winkel im Parameterraum, es sind entsprechend für verschiedene Parameter verschiedene Werte von S wählbar. Im Rahmen des im Zusammenhang mit der Figur 6 weiter unten beschriebenen Ausführungsbeispiels hat es sich beispielsweise herausgestellt, dass bei einem Wert von $S\approx3$ oder grösser die Wahrscheinlichkeit, dass eine andere Zuordnung vorgenommen werden sollte, grösser ist als dass sich die betrachteten Sensorwerte auf einen Ort im Parameterraum beziehen, der im Trichterbereich liegt.

Der Wert $W$ definiert die Steigung der Gesamtfunktion im äusseren "Trichterbereich". Er wird im Hinblick auf die numerische Optimierung so gewählt, dass der Funktionswert der Zielfunktion im gesamten betrachteten Gebiet in einem vorgegebenen Bereich bleibt. Dadurch kann die zur Verfügung stehende Fliesspunkt-Genauigkeit optimal ausgenutzt werden. Es wird vermieden, dass aufgrund hoher Funktionswerte der minimal erfassbare Abstand zweier Funktionswerte vergrössert werden muss. Etwas vereinfacht ausgedrückt wird vermieden, dass Nachkommastellen aufgrund benötigter Vorkommastellen geopfert werden müssen.

Wie oben erwähnt, müssen nicht alle in der Zielfunktion berücksichtigten Parameteranpassungsfunktionen auf dieselbe Weise konditioniert werden. Beispielsweise reicht es aus, wenn nur bei einer der in die Optimierung einbezogenen Parameteranpassungsfunktionen der Trichterterm addiert wird, während bei allen anderen Parameteranpassungsfunktionen lediglich das Abschneiden vorgenommen wird.

Nach durchgeführter Optimierung werden die Parameter des Modellobjekts $M_k$ entsprechend angepasst (Schritt 209). Die Trajektorien der Modellobjekte $M_1...M_3$ und die Zuordnungen können jeweils über eines oder mehrere der Ausgabemittel ausgegeben werden.

Die von den einzelnen Modulen ausgeführten Prozesse können grundsätzlich unabhängig voneinander ausgeführt werden. So können die Datenobjekte $D_1...D_4$ jeweils dann aktualisiert werden, wenn neue Informationen eingehen, und die Ermittlung der optimalen Zuordnung zwischen Daten- und Modellobjekten kann periodisch oder nach Anpassungen in jeweils einem Daten- oder Modellobjekt erfolgen. Analog dazu kann die Optimierung der Parameter eines Modells periodisch, nach Bedarf oder bei der Erfüllung gewisser Bedingungen ausgelöst werden.

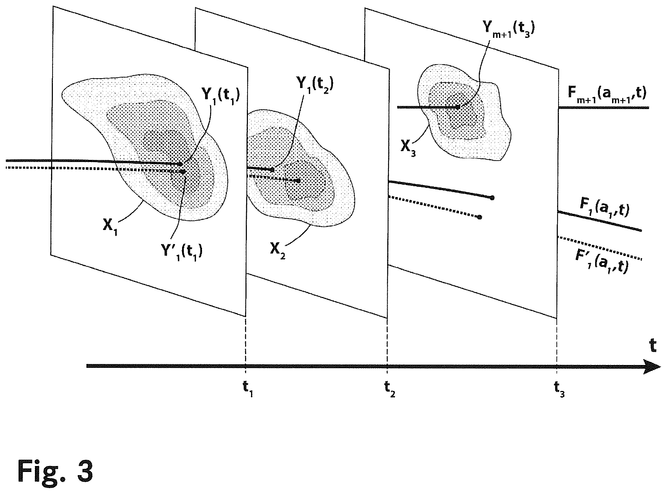

Die Figur 3 ist eine schematische Darstellung der Bestimmung von Trajektorien. Durch eine der Sensorstationen wird zu einem Zeitpunkt $t_1$ eine Messung vorgenommen, durch welche ein Objekt detektiert wird. Aus der Messung ergibt sich eine Wahrscheinlichkeitsverteilung $X_1$ für den Aufenthaltsort des erfassten Objekts. In der Figur ist diese Verteilung vereinfachend nur in zwei Dimensionen dargestellt. Die unterschiedlich schattierten Bereiche der dargestellten Ebene symbolisieren Regionen mit unterschiedlicher Aufenthaltswahrscheinlichkeit (dunkel: grosse Wahrscheinlichkeitsdichte, hell: geringe Wahrscheinlichkeitsdichte). Unter der Annahme, dass die Sensordaten auf ein bisher noch nicht erfasstes Objekt zurückgehen, wird ein neues Modellobjekt $M_1$ erzeugt.

Den Parametern dieses neuen Modellobjekts $M_1$ werden Initialwerte zugewiesen. Diese werden so gewählt, dass die Parametrisierung $F_1(a_1,t)$ als Ort $Y_1(t_1)$ zum Messzeitpunkt $t_1$ das Maximum der Wahrscheinlichkeitsverteilung $X_1$ liefert. Da eine einzige Messung in der Regel die freien Parameter des Modellobjekts nicht eindeutig bestimmt, werden die weiteren Parameter aufgrund von Vorannahmen oder Standardwerten initialisiert. Aus den initialisierten Parametern ergibt sich die erste Näherung der Ortsfunktion $F_1(a_1,t)$.

Eine weitere Messung wird von der Sensorstation zum Zeitpunkt $t_2$ vorgenommen. Es erfolgt nun eine Bewertung der Übereinstimmung zwischen dem Modell, welches durch die Ortsfunktion $F_1(a_1,t)$ der aktuellen Parametrisierung bestimmt ist, und der Wahrscheinlichkeitsverteilung $X_2$, welche sich aus der zweiten Messung ergibt. Wie aus der Figur 3 ersichtlich ist, verläuft die aktuelle Trajektorie des Modells $M_1$ zwar nicht durch den Bereich maximaler Aufenthaltswahrscheinlichkeit zum Zeitpunkt $t_2$, der berechnete Aufenthaltsort $Y_1(t_2)=F_1(a_1,t_2)$ erscheint aber mit den neuen Messdaten verträglich. Dies ergibt sich auch aus dem berechneten Übereinstimmungswert $V_{21}$. Somit wird auch der zweiten Messung das vorhandene Modellobjekt $M_1$ zugewiesen. Als nächstes erfolgt eine numerische Optimierung der Parameter

des vorhandenen Modellobjekts $M_1$. Dazu wird der oben genannte Übereinstimmungswert $V_1$ minimiert. Daraus resultieren neue Parameter und damit eine neue Ortsfunktion $F_1'(a_1,t)$. Wie aus der Darstellung ersichtlich ist, verläuft die entsprechende Trajektorie durch die Bereiche maximaler Aufenthaltswahrscheinlichkeit sowohl der Messung bei $t_1$ als auch bei $t_2$.

Eine weitere Messung wird von der Sensorstation zum Zeitpunkt $t_3$ vorgenommen. Es erfolgt nun erneut eine Bewertung der Übereinstimmung zwischen dem aktuellen Modell, welches durch die Ortsfunktion $F_1'(a_1,t)$ der aktuellen Parametrisierung bestimmt ist, und der Wahrscheinlichkeitsverteilung $X_3$, welche sich aus der dritten Messung ergibt. Wie aus der Figur 3 ersichtlich ist, ergibt sich gemäss der aktuellen Parametrisierung zum Zeitpunkt $t_3$ ein erwarteter Aufenthaltsort, welcher weit entfernt ist von den Bereichen hoher Aufenthaltswahrscheinlichkeit. Dies wird sich auch bei der Berechnung des Übereinstimmungswerts $V_{31}$ zwischen $X_3$ und der Parametrisierung $F_1'$ ergeben. Falls kein weiteres Modellobjekt vorhanden ist, deren Parametrisierung einen besseren Übereinstimmungswert liefert, wird deshalb ein neues Modellobjekt $M_{m+1}$ erzeugt, dessen Parametrisierung einer neuen Ortsfunktion $F_{m+1}(a_{m+1},t)$ entspricht, und der dritten Messung zugewiesen. Diese Erzeugung und die Initialisierung erfolgen auf dieselbe Weise wie oben in Bezug auf das erste Modellobjekt beschrieben. Wiederum werden die Initialwerte der Parameter so gewählt, dass die Parametrisierung $F_{m+1}(a_{m+1},t)$ als Ort $Y_{m+1}(t_3)$ zum Messzeitpunkt $t_3$ das Maximum der Wahrscheinlichkeitsverteilung $X_3$ liefert.

Da dem ersten Modellobjekt $M_1$ vorerst keine weiteren Messdaten zugewiesen wurden, erübrigt sich vorerst eine erneute numerische Optimierung. Die beschriebenen Schritte werden auch für die nachfolgend eintreffenden Sensordaten durchgeführt, so dass die erfasste Lage ständig aktualisiert wird.

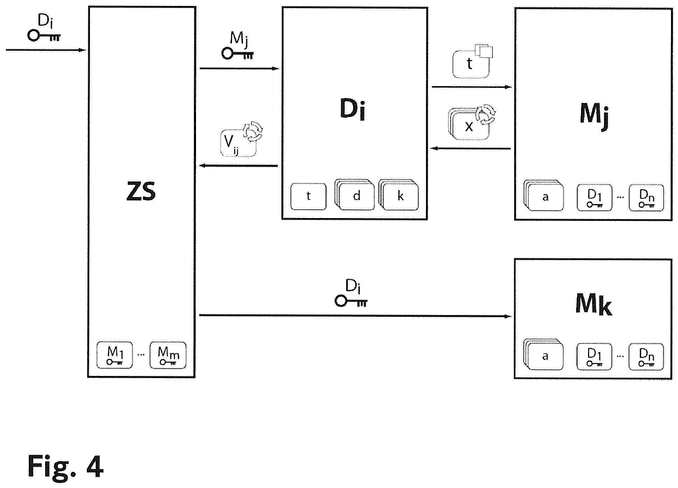

Die Figur 4 ist ein Blockdiagramm, welches die Wechselwirkung zwischen einem Datenobjekt $D_i$ und Modellobjekten $M_j$ bei der Zuordnung des Datenobjekts $D_i$ zu einem der Modellobjekte illustriert. Diese Funktionen werden vom Berechnungsmodul 130 und dem Entscheidungsmodul 140 der im Zusammenhang mit der Figur 1 beschriebenen Anordnung bereitgestellt.

Einer zentralen Steuerung ZS wird eine Referenz auf das Datenobjekt $D_i$ übergeben. Die Steuerung übergibt diesem Datenobjekt $D_i$ nacheinander Referenzen auf verschiedene Modellobjekte $M_j$, j = 1,...,m. Für jedes der Modellobjekte wird dann folgender Prozess durchgeführt: Das Datenobjekt $D_i$ liefert den Messzeitpunkt t an das Modellobjekt $M_j$. Im Modellobjekt $M_j$ wird dann die Ortsfunktion, welche durch die Parameter $a$ bestimmt ist, zum Zeitpunkt t ausgewertet. Der resultierende Ort x wird an das Datenobjekt $D_i$ zurückgegeben. Das Datenobjekt berechnet dann den Übereinstimmungswert $V_{ij}$ und gibt diesen an die zentrale Steuerung weiter. Dieser entspricht einer Angabe darüber, wie wahrscheinlich es ist, dass das Modellobjekt $M_j$ demjenigen Objekt entspricht, welches vom Datenobjekt $D_i$ repräsentiert wird.

Nach Durchlaufen dieses Prozesses für alle Modellobjekte $M_j$, j=1,...,m wird anhand der Übereinstimmungswerte wie weiter oben beschrieben ermittelt, ob das Datenobjekt $D_i$ einem der vorhandenen Modellobjekte oder einem neuen Modellobjekt $M_k$ zugeordnet wird, anschliessend wird durch die Übergabe einer Referenz auf das Datenobjekt $D_j$ an das Modellobjekt $M_k$ und Speicherung dieser Referenz im Modellobjekt $M_k$ die Zuordnung vorgenommen.

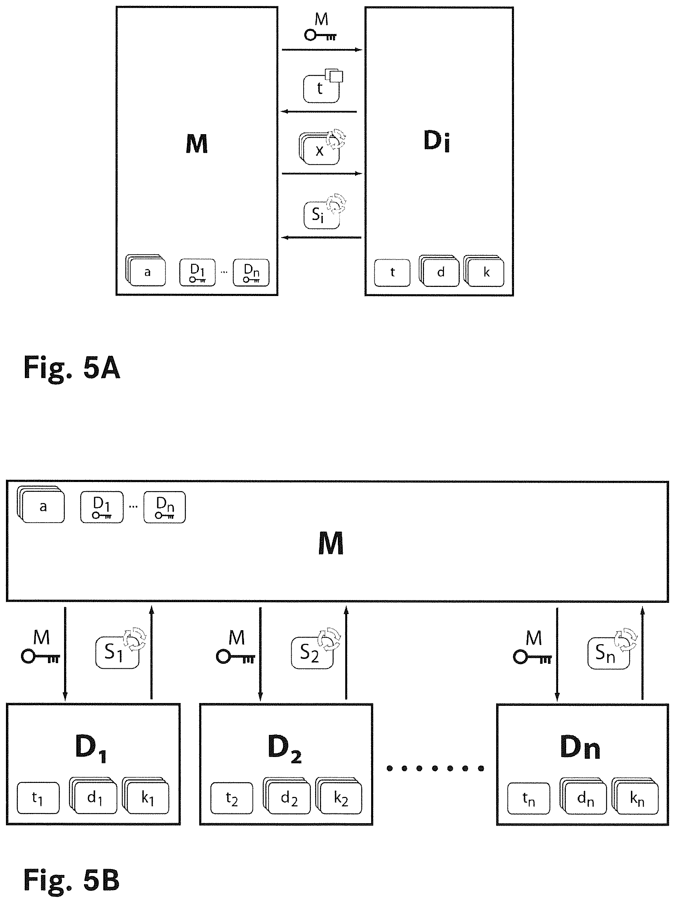

Die Figuren 5A und 5B sind Blockdiagramme, welche die Wechselwirkung zwischen einem Modell- und den diesem zugeordneten Datenobjekten bei der Berechnung der Zielfunktion für die numerische Optimierung illustrieren. Diese Berechnung wird vom Optimierungsmodul 150 der erfindungsgemässen Anordnung vorgenommen.

Optimiert werden sollen die variablen Parameter des Modellobjekts M in Abhängigkeit der Datenobjekte $D_i$, welche dem Modellobjekt M zugeordnet sind. Die folgenden, in der Figur 5A illustrierten Schritte werden dazu für alle zugeordneten Datenobjekte $D_i$ durchgeführt. Zunächst wird eine Referenz auf das Modellobjekt M an das Datenobjekt $D_i$ übergeben. Das Datenobjekt $D_i$ liefert dann den Messzeitpunkt t an das Modellobjekt M zurück. Im Modellobjekt wird dann die Ortsfunktion, welche durch die Parameter $a$ bestimmt ist, zum Zeitpunkt t ausgewertet. Der resultierende Ort x wird an das Datenobjekt $D_i$ zurückgegeben. Das Datenobjekt $D_i$ wendet nun seine Parameteranpassungsfunktion $P_i(x,t)$ auf den Ort und den Zeitpunkt an. In die Parameteranpassungsfunktion gehen neben den Sensordaten $d$ üblicherweise auch weitere Sensorparameter $k$ ein, welche beispielsweise den Ort des Sensors und gegebenenfalls auch dessen Geschwindigkeit zum Messzeitpunkt angeben. Aus dem erhaltenen Wert der Parameteranpassungsfunktion wird dann ein Anpassungsterm $S_i$ berechnet und an das Modellobjekt M zurückgegeben. Er entspricht einer Angabe darüber, wie genau der Messwert, welcher vom Datenobjekt $D_i$ repräsentiert wird, von der Parametrisierung des Modellobjekts M reproduziert wird. Grundsätzlich kann als Anpassungsterm $S_i$ der Wert der Validierungsfunktion $V_i$ zurückgegeben werden. Wie weiter unten im Detail beschrieben, kann aber zur Verbesserung der numerischen Optimierung eine spezifische Parameteranpassungsfunktion herangezogen werden, diese kann zudem noch konditioniert werden, so dass nicht der Wert der Validierungsfunktion, sondern der Wert der (gegebenenfalls konditionierten) Parameteranpassungsfunktion zurückgegeben wird.

In der Figur 5B sind die beschriebenen Schritte für die Datenobjekte $D_1, D_2, ..., D_n$ in vereinfachter Form dargestellt. Die Verarbeitung kann für die einzelnen Datenobjekte nacheinander oder gleichzeitig erfolgen. Das Modellobjekt M übergibt seine Referenz allen ihm zugeordneten Datenobjekten $D_1, D_2, ..., D_n$ und erhält entsprechend viele Anpassungsterme $S_1, S_2, ..., S_n$ zurück. Aus diesen Anpassungstermen $S_1, S_2, ..., S_n$ wird dann die Zielfunktion generiert, z. B. indem alle Anpassungsterme $S_1$, $S_2$, ..., $S_n$ addiert werden.

Im Zusammenhang mit der Figur 6 ist der Ablauf des erfindungsgemässen Verfahrens anhand eines vereinfachten Beispiels dargestellt.

Auf einer Zugstrecke von A nach B, deren Länge insgesamt 10 km beträgt, sind bei 2 km, 5 km und 7 km Sensoren (S1, S2, S3) angebracht, welche die Geschwindigkeit vorbeifahrender Züge messen. Die gemessenen Werte werden von den Sensoren mit einem Zeitstempel versehen und zur Auswertung an eine zentrale Auswertestation übermittelt.

Ausgehend von einer Messungenauigkeit der Geschwindigkeitswerte $v_0$ von $\sigma_v$ = 5 m/s und einer Reichweite der Sensoren, welche zu einer Unsicherheit bei der Position des Zuges in Bezug zum Sensorstandort $\mu_x$ von $\sigma_x$ = 100 m ergibt, wird die Wahrscheinlichkeitsdichtefunktion der Sensoren wie folgt modelliert:

$$PDF(x,v) = \exp\left(-\frac{(x-\mu_x)^2}{2\sigma_x^2} - \frac{(v-\mu_v)^2}{2\sigma_v^2}\right) \qquad (1.1)$$

Wobei $x$ und $v$ die vermutete Position und Geschwindigkeit des Zuges bei der Messung sind. Im vorliegenden Beispiel gilt $\mu_v$=0, weil die Sensoren bezüglich des betrachteten ortsfesten Bezugssystems stillstehen. Für die folgende Diskussion werden zwei Hilfsfunktionen definiert:

$$L(x,v) = \frac{(x-\mu_x)^2}{\sigma_x^2} + \frac{(v-\mu_v)^2}{\sigma_v^2} \text{ und} \qquad (1.2)$$

$$R(x,v) = \begin{cases} L(x,v) & \text{falls} \quad L(x,v) < S^2 \\ S^2 & \text{sonst} \end{cases} \qquad (1.3)$$

Es gilt also

$$PDF'(x,v) = \exp\left(-\frac{1}{2}L(x,v)\right) \qquad (1.4)$$

Als Validierungsfunktion wird

$$V(x,v) = \sqrt{L(x,v)} \qquad (1.5)$$

verwendet, als Parameteranpassungsfunktion

$$P(x,v) = R(x,v) + \frac{\sqrt{L(x,v)}}{W}. \qquad (1.6)$$

Die Werte W und S, welche die Konditionierung parametrisieren, werden im beschriebenen Beispiel als W=3 und S=4 gewählt.

Die Züge werden durch Modellobjekte $M_i$ wie folgt modelliert:

$$\vec{X}(t,\vec{a}) = \begin{pmatrix} x \\ v \end{pmatrix} = \begin{pmatrix} a_0 + a_1 t \\ a_1 \end{pmatrix} \qquad (1.7)$$

Dabei werden mit $\vec{a}$ die veränderbaren Parameter $a_0$ (Position des Zuges zum Zeitpunkt $t$ = 0) und $a_1$ (Geschwindigkeit des Zuges) und mit $\vec{X}$ die Koordinaten $(x, v)$ des Referenzkoordinatensystems zusammengefasst.

Eine Modellobjekt-spezifische Zielfunktion $Q_o$ wird durch die Summe der sensorspezifischen Parameteranpassungsfunktionen definiert:

$$Q_o(\vec{a}) = \sum_i P_i(\vec{X}) . \qquad\qquad (1.8)$$

Dabei wird für die Umrechnung von $\vec{a}$ nach $\vec{X}$ für jedes zugeordnete Datenobjekt die Funktion (1.7) an der Stelle $t = t_i$, d. h. dem Gültigkeitszeitpunkt des Datenobjekts, ausgewertet.

Das Verfahren wird nun mit konkreten Zahlen durchgespielt. Die Sensoren liefern in diesem Beispiel die folgenden Werte:

| Index | Sensor | Sensorposition $x_0$ [m] | $t_i$ [s] | $v_{0,i}$ [m/s] |
|-------|--------|--------------------------|-----------|-----------------|
| 1 | S1 | 2000 | -92.2 | 51.20 |
| 2 | S2 | 5000 | -30.9 | 45.55 |
| 3 | S1 | 2000 | -4.7 | 48.80 |
| 4 | S3 | 7000 | 9.4 | 53.30 |
| 5 | S2 | 5000 | 77.0 | 33.55 |
| 6 | S3 | 7000 | 128.9 | 31.15 |

Es ergibt sich der folgende Ablauf:

1. Der Sensor S1 liefert den Wert (-92.2, 51.20). Da noch keine Modellobjektinstanz vorliegt, wird eine neue Instanz $M_1$ erzeugt und mit ($a_{0,1}$ = 0; $a_{1,1}$ = 0) initialisiert.

2. Das Datenobjekt D1 mit den ersten Sensordaten wird M1 zugeordnet.

3. Die Minimierung der M1 entsprechenden Zielfunktion $Q_1(\vec{a_1})$ ergibt $a_{0,1}$ = 6721; $a_{1,1}$ = 51.2.

4. Der Sensor S2 liefert den Wert (-30.9, 45.55). Die Datenobjekt-spezifische Validierungsfunktion $V_2(x,v)$ liefert in Bezug auf M1, d. h. $V_2(\vec{X_1}(\vec{a_1}, t=t_2))$, den Übereinstimmungswert $V_{21}$=1.788, welcher hinreichend klein ist, um eine Zuordnung des Datenobjekts D2 zu M1 zu rechtfertigen.

5. Das Datenobjekt D2 mit den zweiten Sensordatenset wird also M1 zugeordnet

6. Die Minimierung der M1 entsprechenden Zielfunktion $Q_1(\vec{a_1})$ ergibt $a_{0,1}$ = 6504; $a_{1,1}$ = 48.8, d. h. eine Anpassung der Modellparameter.

7. Der Sensor S1 liefert den Wert (-4.7, 48.80). Da $V_3(\vec{X_1}(\vec{a_1}, t=t_3))$ = 42.742 für eine gerechtfertigte Zuordnung zu M1 deutlich zu hoch ist, wird eine neue Objektmodelinstanz M2 erzeugt und auf (0,0) initialisiert.

8. Das Datenobjekt D3 mit dem dritten Sensordatenset wird M2 zugeordnet.

9. Die Minimierung der M2 entsprechenden Zielfunktion $Q_2(\vec{a_2})$ ergibt $a_{0,2}$ = 2229; $a_{1,2}$ = 48.8.

10. Der Sensor S3 liefert den Wert (9.4, 53.30). Aufgrund des Vergleichs von $V_4(\vec{X_1}(\vec{a_1}, t=t_4))$ = 0.976 und $V_4(\vec{X_2}(\vec{a_2}, t=t_4))$ = 43.130, wird klar, dass M1 besser zu den Sensordaten passt und auch mit den Sensordaten verträglich ist.

11. Das Datenobjekt D4 mit dem vierten Sensordatenset wird M1 zugeordnet.

12. Die Minimierung der M1 entsprechenden Zielfunktion $Q_x(\vec{a_1})$ ergibt $a_{0,1}$ = 6538; $a_{1,2}$ = 49.35.

13. Der Sensor S2 liefert den Wert (77.0, 33.55). Die Berechnung der Validierungsfunktionen ergibt $V_5(\overrightarrow{X_1}(\overrightarrow{a_1},t{=}t_5))$ = 53.468 und $V_5(\overrightarrow{X_2}(\overrightarrow{a_2},t{=}t_5))$ = 10.350. Beide Werte sind relativ hoch. Es wird entsprechend testweise je eine Zuordnung des Datenobjekts D5 zu den beiden Modellen M1 und M2 vorgenommen und anschliessend eine Minimierung der entsprechenden Zielfunktion Q. Um sicherzustellen, dass alle Minima erfasst werden, können wie weiter unten beschrieben mehrere Minimierungen mit unterschiedlichen Startpunkten und/oder anfänglichen Schrittweiten erfolgen. Daraus ergibt sich, dass nach einer Minimierung die Validierungsfunktion $V_5(\overrightarrow{X_2}(\overrightarrow{a_2},t{=}t_5))$ nur noch 0.85 beträgt. Die Zuordnung des Datenobjekts D5 zu M2 erscheint somit angezeigt.

14. Das Datenobjekt D5 mit den fünften Sensordatenset wird also M2 zugeordnet.

15. Die Minimierung der M2 entsprechenden Zielfunktion $Q_2(\overrightarrow{a_2})$ ergibt $a_{0,2}$ = 2143; $a_{1,2}$ = 37.5.

16. Der Sensor S3 liefert den Wert (128.9, 31.15). Aufgrund des Vergleichs von $V_6(\overrightarrow{X_1}(\overrightarrow{a_1},t{=}t_6))$ = 59.049 und $V_6(\overrightarrow{X_2}(\overrightarrow{a_2},t{=}t_6))$ = 1.300, wird klar, dass M2 besser zu den Sensordaten passt und auch mit den Sensordaten verträglich ist.

17. Das Datenobjekt D6 mit dem sechsten Sensordatenset wird M2 zugeordnet.

18. Die Minimierung der M2 entsprechenden Zielfunktion $Q_2(\overrightarrow{a_2})$ ergibt $a_{0,2}$ = 2158; $a_{1,2}$ = 37.41.

Als Ergebnis aus den sechs berücksichtigten Sensordatensets ergeben sich für die Modellparameter die folgenden Werte:

$a_{0,1}$ = 6538; $a_{1,1}$ = 49.35

$a_{0,2}$ = 2158; $a_{1,2}$ = 37.41

Es wurden also insgesamt zwei Züge festgestellt. Die Modellparameter $\overrightarrow{a_i}$ wurden fortlaufend angepasst.

Dieses vereinfachte Beispiel illustriert den generellen Ablauf des erfindungsgemässen Verfahrens. In Bezug auf komplexere Anwendungen ist aber Folgendes zu beachten:

- Bei den Komponenten von $\overrightarrow{X}$ wird es sich in der Regel um die Orts- und Geschwindigkeitskoordinaten des modellierten Objekts handeln. Das Modellobjekt kann aber weitere Parameter umfassen, die das Objekt zusätzlich charakterisieren, z. B. den Typ des Objekts, dessen Sichtbarkeit oder Beschleunigung. Prinzipiell ist jegliche Information von Nutzen, die aus dem Modell abgeleitet werden kann und für die Abschätzung der Plausibilität von Bedeutung ist. Bei der Software-Implementierung des Verfahrens werden deshalb mit Vorteil nicht Parameterwerte aus dem Modellobjekt übergeben, sondern eine Referenz zum Modellobjekt, so dass die entsprechenden Routinen, z. B. zur Berechnung des Übereinstimmungswerts, auf die jeweils von ihnen benötigten Modellparameter oder davon abgeleitete Grössen zugreifen können.

- Falls an Stelle eines fixen (Gültigkeits-)Zeitpunkts ein Zeitintervall oder gar eine unspezifische Zeitangabe vorliegt, weicht die mathematische Beschreibung vom obigen Beispiel ab. Die Situation, dass kein fixer Gültigkeitszeitpunkt vorliegt, ergibt sich z. B. dann, wenn ein "Geländemodell" oder ein "Flugmanöverbewertungsmodell", als zusätzliche Datenobjekte hinzugefügt werden. Diese werden beispielsweise die Bahnkurve abfragen oder Maximal- bzw. Minimalwerte der Geschwindigkeit und/oder der Beschleunigung und diese jeweils gegenüber einer bestimmten Hypothese überprüfen.

- Die von einem Datenobjekt repräsentierten Sensordaten können sehr umfangreich (z.B. ein ganzes Videobild) oder nebst a priori Daten quasi "leer" sein, d. h. ausser dem Gültigkeitszeitpunkt keine weiteren Angaben enthalten. Der Ablauf gemäss obigem Beispiel würde ohne Weiteres auch funktionieren, wenn die Geschwindigkeitsangaben eines oder mehrerer der Sensoren fehlen würden. Das Verfahren unterscheidet nicht zwischen verschiedenen Klassen von in die Auswertung einbezogenen Daten. Was benötigt wird, sind Datenobjekte, die jeweils eine Validierungsfunktion enthalten, mit der durch Zusammenwirken mit einem Modellobjekt ein Mass für die Wahrscheinlichkeit ermittelt werden kann (Übereinstimmungswert), dass das Modellobjekt einem realen physischen Objekt im beobachteten Raum entspricht, welches durch den dem Datenobjekt zugeordneten Satz von a priori und a posteriori Informationen einer Einzelmessung des dem Datenobjekt zugeordneten Sensors charakterisiert ist.

Die Figuren 7A und B zeigen Konturplots, welche die Zielfunktion mit und ohne Konditionierung der Parameteranpassungsfunktionen darstellen und zwar im Bereich des Minimums der Zielfunktion. Die Zielfunktion repräsentiert im dargestellten Fall eine falsche Zuordnung der Datenobjekte zu den Modellobjekten. Es ist gut sichtbar, dass sich im unkonditionierten Fall (Figur 7B) ein einziges Minimum ergibt. Aufgrund der Fehlzuordnung ist die Funktion im Bereich des Minimums etwas deformiert und das Minimum selbst ist verschoben gegenüber demjenigen einer Zielfunktion, die nur die korrekten Zuordnungen umfasst.

Die Zielfunktion in der Figur 7A ergibt sich, wenn eine Konditionierung wie vorstehend beschrieben vorgenommen wird. Es ist gut sichtbar, dass nun drei Minima vorliegen und ohne weiteres klar, dass sich aus der konditionierten Zielfunktion einfacher bzw. überhaupt zusätzliche Informationen zur Güte der Optimierung gewinnen lassen. Z. B. lässt sich anhand des Plots einfach feststellen, dass die Zuordnungen zu überprüfen sind, weil keine eindeutige Situation vorliegt.

Der Parameterraum ist in der Regel nicht zwei- sondern höherdimensional, so dass eine derart einfache Darstellung wie in der Figur 7 nicht möglich ist. Die Optimierung wird in der Regel eines der (lokalen) Minima liefern. Durch Anpassung des Minimierungsschritts oder des Startpunkts kann nun aber erreicht werden, dass auch die anderen Minima der konditionierten Zielfunktion als Ergebnisse weiterer Optimierungsprozesse erscheinen. Es werden entsprechend mehrere Minimierungen mit unterschiedlichen Verfahrensparametern durchgeführt. Dies kann auch automatisiert erfolgen, indem die Verfahrensparameter systematisch variiert werden. Die Existenz mehrerer Minima, die entsprechenden Werte der optimierten Zielfunktion und deren Positionen und Abstände im Parameterraum liefern wertvolle Hinweise auf die Richtigkeit der erfolgten Zuordnungen.

Abstrakt betrachtet werden im Rahmen der Optimierung bedingte Wahrscheinlichkeiten betrachtet, die Bedingung entspricht der gegebenen Zuordnung zwischen Daten und Modellen. Die Konditionierung ermöglicht nun das Auffinden von Indizien, dass die Zuordnung nicht richtig sein könnte. Vereinfacht gesagt entspricht jedes Minimum der konditionierten Zielfunktion der Position eines bestimmten Objekts unter Annahme einer gewissen Zuordnung.

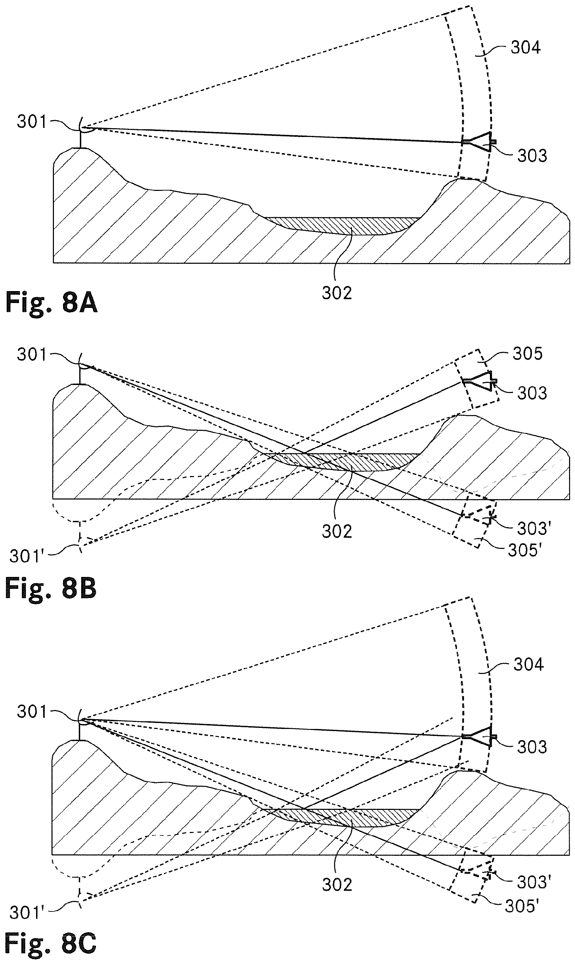

Die Berücksichtigung von Reflektionen im Rahmen eines erfindungsgemässen Verfahrens wird im Zusammenhang mit den Figuren 8A-C dargestellt.

Ein Sensor 301 ist im dargestellten Beispiel so im Gelände platziert, dass es Reflexionen an der Oberfläche eines nahe liegenden Sees 302 geben kann (siehe Figur 8A). Es handelt sich hier um einen Suchradar, der nur einen Azimutwert und eine Entfernung des verfolgten Objekts 303 liefert. Die Elevation ist durch das System selbst und durch das Gelände auf einen gewissen Bereich 304 eingeschränkt. Diese Einschränkung durch das Gelände wird vorausberechnet und auf geeignete Weise in einer Tabelle zwischengespeichert.

Es kann hier in Kenntnis der Topographie über den Azimut des Referenzdatums entschieden werden, ob eine Reflexion möglich ist und ob bei der Berechnung des Übereinstimmungswerts und der Berechnung der Zielfunktion für die numerische Optimierung ein zusätzlicher Abbildungsmechanismus zur Berücksichtigung des reflektierten Signals herangezogen werden soll.

Bei einem Iterationsschritt der Parameteranpassung passiert nun folgendes:

1. Der entsprechende Term der Zielfunktion wird für die Abbildung ohne Spiegelung berechnet.

   a. Die Zielposition zum Gültigkeitszeitpunkt des Referenzdatums wird abgefragt.

   b. Die Distanz und Elevation zwischen Ziel 303 und Radar 301 werden berechnet.

   c. Die untere Grenze des Elevationsbereichs 304, welche sich durch das Gelände ergibt, wird auf Basis der Distanz angepasst.

   d. Die Wahrscheinlichkeitsdichte bezüglich der Elevation wird modifiziert, d. h. im verbotenen Bereich abgeschnitten (auf Null gesetzt).

   e. Der aus der Dichtefunktion gebildete Term der Zielfunktion wird aus dem Elevationsbereich 304, dem Abstand, dem Azimut, den jeweiligen Fehlerstatistiken und dem erwähnten Trichter-Term gebildet.

2. Der entsprechende Term der Zielfunktion wird für die Abbildung mit Spiegelung berechnet, die entsprechende Situation ist in der Figur 8B dargestellt:

   a. Die Position des Sensors 301 und/oder des Ziels 303 wird an der Oberfläche des Sees 302 gespiegelt. Es ergeben sich die gespiegelten Positionen des Sensors 301' und des Ziels 303' (vgl. Figur 8B).

   b. Die Distanz und Elevation zwischen dem gespiegelten Ziel 303' und dem Radar 301 (bzw. dem Ziel 303 und dem gespiegelten Radar 301') werden berechnet.

c. Die untere Grenze des Elevationsbereichs 305', welche sich durch das Gelände ergibt und der oberen Grenze des Elevationsbereichs 305 entspricht,, wird auf Basis der Distanz angepasst (auf der Strecke vor der Spiegelung).

d. Die untere Grenze des Elevationsbereichs 305, welche sich durch das Gelände ergibt, wird (ebenfalls) auf Basis der Distanz angepasst (auf der Strecke nach der Spiegelung).

e. Die untere und obere Grenze des Elevationsbereichs 305 des gespiegelten Signals werden angepasst (die spiegelnde Fläche muss den gesamten Elevationsbereich abdecken).

f. Nach der Spiegelung wird die obere Grenze des Elevationsbereichs 305 zur unteren Grenze, deshalb ergibt sich die Anpassung der unteren Elevationsgrenze durch die Strecke nach der Spiegelung.

g. Die Wahrscheinlichkeitsdichte bezüglich der Elevation wird modifiziert, d. h. im verbotenen Bereich abgeschnitten (auf Null gesetzt).

h. Der aus der Dichtefunktion gebildete Term der Zielfunktion wird aus dem Elevationsbereich, dem Abstand, dem Azimut, den jeweiligen Fehlerstatistiken und dem erwähnten Trichter-Term gebildet.

3. Der kombinierte Anteil der Zielfunktion, gebildet aus der Summe der beiden Terme aus den Schritten 1 und 2 wird zurückgegeben. Die Gesamtsituation ist in der Figur 8C gezeigt.

Durch diese Handhabung werden Radardaten, welche durch eine Spiegelung hervorgerufen werden, nicht einfach verworfen, sondern ohne weiteres in die Parameteranpassung mit einbezogen.

Die Erfindung ist nicht auf die vorstehend dargestellten Ausführungsbeispiele beschränkt. Insbesondere kann die spezifische Form der verwendeten Berechnungsvorgaben unterschiedlich sein. Die Konditionierung der Zielfunktion ist zudem nicht auf den Einsatz in Verfahren zur Bestimmung von Trajektorien beweglicher physischer Objekte beschränkt, sondern lässt sich mit Vorteil in einer Reihe von Verfahren einsetzen, die die numerische Optimierung einer Zielfunktion umfassen.

Zusammenfassend ist festzustellen, dass die Erfindung ein Verfahren zur Bestimmung von Trajektorien beweglicher physischer Objekte sowie eine entsprechende Anordnung schafft, welche eine hohe Flexibilität aufweisen und Ergebnisse hoher Präzision liefern.

**Patentansprüche**

1. Verfahren zur Bestimmung von Trajektorien beweglicher physischer Objekte in einem Raum, auf der Basis von Sensordaten mehrerer Sensoren (S1, S2, S3), umfassend folgende Schritte:

a) Erzeugen von ersten Datenobjekten ($D_1...D_4$) ausgehend von den Sensordaten, wobei jedes erste Datenobjekt ($D_1...D_4$) mindestens eine Zeitangabe (t) und eine Ortsangabe (d) eines von mindestens einem der Sensoren (S1, S2, S3) erfassten Objekts sowie eine Validierungsfunktion ($V_i(x, t)$) umfasst, wobei die Validierungsfunktion ($V_i(x, t)$) eine Wahrscheinlichkeitsdichtefunktion PDF ($x_i$ $t_i$, $d_i$, $k_i$) ist, welche eine Messcharakteristik eines entsprechenden Sensors (S1, S2, S3) repräsentiert und zu einem gegebenen Zeitpunkt t jedem Ort x eine Wahrscheinlichkeitsdichte für den Aufenthalt des von den Sensordaten repräsentierten Objekts an diesem Ort zuweist;

**dadurch gekennzeichnet, dass** das Verfahren weiter die folgenden Schritte umfasst:
b) Bereitstellen mindestens eines Modellobjekts ($M_1...M_3$), welches eine Parametrisierung einer Trajektorie eines der beweglichen Objekte mit mindestens einem variablen Parameter ($\alpha$) repräsentiert;
für die ersten Datenobjekte ($D_1...D_4$):

c) Berechnen eines Übereinstimmungswerts ($V_{ik}$) für eine Zuordnung des Datenobjekts ($D_1...D_4$) zu mindestens einem der bereitgestellten Modellobjekte ($M_1...M_3$) durch Auswerten der Validierungsfunktion ($V_i(x,t)$) des Datenobjekts ($D_1...D4$) für die Modellobjekte ($M_1...M_3$), wobei anhand der Trajektorie, welche vom jeweiligen Modellobjekt ($M_1...M_3$) parametrisiert wird, ein erwarteter Aufenthaltsort des vom Modellobjekt ($M_1...M_3$) reprä-

sentierten Objekts zu einem Zeitpunkt einer vom ersten Datenobjekt ($D_1$...$D_4$) repräsentierten Messung berechnet wird und die Validierungsfunktion ($V_i(x, t)$) in Abhängigkeit dieses Aufenthaltsorts eine Aussage über die Wahrscheinlichkeit liefert, dass die vom ersten Datenobjekt ($D_1$...$D_4$) repräsentierten Sensordaten auf das vom jeweiligen Modellobjekt ($M_1$...$M_3$) repräsentierte Objekt zurückgehen,

so dass die Validierungsfunktion ($V_i(x,t)$) der ersten Datenobjekte ($D_1$...$D_4$) bei Anwendung auf ein betrachtetes der Modellobjekte ($M_1$...$M_3$) einen Wert liefert, welcher ein Mass ist für eine Wahrscheinlichkeit, dass das betrachtete Modellobjekt ($M_1$...$M_3$) einem physischen Objekt im beobachteten Raum entspricht, welches von den Daten des Datenobjekts ($D_1$...$D_4$) repräsentiert wird, so dass der Übereinstimmungswert angibt, wie wahrscheinlich es ist, dass ein Modellobjekt ($M_1$...$M_3$) demjenigen physischen Objekt entspricht, welches vom Datenobjekt ($D_1$...$D_4$) repräsentiert wird;

d) falls keiner der Übereinstimmungswerte ($V_{ik}$) in einem vorgegebenen Bereich liegt, Bereitstellen eines zusätzlichen Modellobjekts ($M_1$...$M_3$), welches eine Parametrisierung einer Trajektorie eines der beweglichen physischen Objekte mit mindestens einem variablen Parameter ($\alpha$) repräsentiert, und Zuordnen des Datenobjekts ($D_1$...$D_4$) zum zusätzlichen Modellobjekt ($M_1$...$M_3$);

e) falls mindestens einer der Übereinstimmungswerte ($V_{ik}$) im vorgegebenen Bereich liegt, Zuordnen des Datenobjekts ($D_1$...$D_4$) zu demjenigen bereitgestellten Modellobjekt ($M_1$...$M_3$), welches dem besten Übereinstimmungswert ($V_{ik}$) entspricht; und

f) für das Modellobjekt ($M_1$...$M_3$), welchem das Datenobjekt ($D_1$...$D_4$) zugeordnet wurde, Durchführen einer numerischen Optimierung durch Minimieren einer Zielfunktion (Q) durch Variation des mindestens einen variablen Parameters ($\alpha$) des Modellobjekts ($M_1$...$M_3$), wobei die Zielfunktion (Q) eine Funktion ist von Parameteranpassungsfunktionen wenigstens eines Teils der dem Modellobjekt ($M_1$...$M_3$) zugeordneten Datenobjekte ($D_1$...$D_4$) und ein Mass ist für Abweichungen der von den Datenobjekten repräsentierten Messwerte von der parametrisierten Trajektorie des Modells, und Aktualisieren des mindestens einen variablen Parameters ($\alpha$) dieses Modellobjekts ($M_1$...$M_3$);

wobei die Schritte für nachfolgend eintreffende Sensordaten durchgeführt werden, so dass eine erfasste Lage ständig aktualisiert wird.

2. Verfahren nach Anspruch 1, **dadurch gekennzeichnet, dass** es sich bei den Sensordaten um Radardaten handelt, insbesondere um Abstands- und Winkelinformationen mehrerer räumlich distanziert angeordneter Suchradare (11, 21, 31).

3. Verfahren nach Anspruch 1 oder 2, **dadurch gekennzeichnet, dass** zweite Datenobjekte bereitgestellt und einem oder mehreren Modellobjekten ($M_1$...$M_3$) zugeordnet werden, wobei diese zweiten Datenobjekte vorbekannte Informationen, insbesondere zu realistischen Aufenthaltsorten und/oder zu vermuteten zukünftigen Ereignissen, oder Randbedingungen zu möglichen Trajektorien, insbesondere maximale Geschwindigkeiten oder Beschleunigungen, repräsentieren.

4. Verfahren nach einem der Ansprüche 1 bis 3, **dadurch gekennzeichnet, dass** zum Auswerten der Validierungsfunktion ($V_i(x,t)$) des Datenobjekts ($D_1$...$D_4$) für die Modellobjekte ($M_1$...$M_3$) und die Berechnung mindestens einer der Parameteranpassungsfunktionen eine modellgestützte Abbildung auf Zeit- und/oder Ortsangaben (t, d) angewandt wird, wobei das eingesetzte Modell Störeffekte modelliert, welche die vom entsprechenden Sensor (S1, S2, S3) erfassten Sensordaten beeinflussen.

5. Verfahren nach Anspruch 4, **dadurch gekennzeichnet, dass** die modellgestützte Abbildung zwei oder mehr Abbilder erzeugt, um Störeffekte zu erfassen, welche zu einer Vervielfachung von Signalen eines zu erfassenden physischen Objekts führen.

6. Verfahren nach einem der Ansprüche 1 bis 5, **dadurch gekennzeichnet, dass** die Zielfunktion (Q) für die numerische Optimierung eine Funktion umfasst, die Sensordaten desselben Sensors (S1, S2, S3) verknüpft, die verschiedene Zeitpunkte repräsentieren, wobei die Funktion derart definiert ist, dass gleichbleibende Einflüsse systematischer Fehler auf die Sensordaten der verschiedenen Zeitpunkte in der numerischen Optimierung präferiert werden.

7. Verfahren nach einem der Ansprüche 1 bis 6, **dadurch gekennzeichnet, dass** für die numerische Optimierung des Übereinstimmungswerts ($V_{ik}$) eine Konditionierung der Zielfunktion (Q) der Optimierung vorgenommen wird, indem die Parameteranpassungsfunktion mindestens eines der ersten Datenobjekte ($D_1$...$D_4$) derart modifiziert wird, dass unabhängig von der unmodifizierten Parameteranpassungsfunktion ein Gradient der modifizierten Parameteranpassungsfunktion ausser in einem Bereich des Parameterraums, welcher einem räumlichen Gebiet entspricht, das den anhand des Datenobjekts ($D_1...D_4$) erwarteten Ort umgibt, einen Betrag in einem vorgegebenen Bereich aufweist.

8. Verfahren nach Anspruch 7, **dadurch gekennzeichnet, dass** die Konditionierung folgende Schritte umfasst:

   a) Abschneiden einer unmodifizierten Parameteranpassungsfunktion entlang einer Grenzfläche, welche einer unteren Grenze einer Aufenthaltswahrscheinlichkeit entspricht;
   b) Ergänzen der resultierenden Funktion durch eine Hilfsfunktion, so dass der Gradient der modifizierten Parameteranpassungsfunktion ausser in einem Bereich innerhalb der Grenzfläche den Betrag im vorgegebenen Bereich aufweist.

9. Verfahren nach Anspruch 7 oder 8, **dadurch gekennzeichnet, dass** die modifizierte Parameteranpassungsfunktion an Orten, bei denen sich zum betrachteten Zeitpunkt anhand des Datenobjekts ($D_1...D_4$) mit hoher Wahrscheinlichkeit ein Objekt aufgehalten hat, bis auf einen ersten konstanten Term im Wesentlichen proportional zum Logarithmus einer Aufenthaltswahrscheinlichkeit am entsprechenden Ort ist, und derart, dass die modifizierte Validierungsfunktion an Orten mit geringer Aufenthaltswahrscheinlichkeit bis auf einen zweiten konstanten Term zumindest annähernd proportional zum Abstand zwischen dem Ort und einem Ort mit einer grössten Aufenthaltswahrscheinlichkeit ist.

10. Verfahren nach einem der Ansprüche 7 bis 9, **dadurch gekennzeichnet, dass** die modifizierte Parameteranpassungsfunktion im Bereich des Parameterraums, welcher dem räumlichen Gebiet entspricht, das den anhand des Datenobjekts ($D_1...D_4$) erwarteten Ort umgibt, eine quadratische Form der numerisch zu optimierenden Parameter der Parameteranpassungsfunktion darstellt und dass der Betrag des Gradienten der modifizierten Parameteranpassungsfunktion ausserhalb dieses Bereichs mit wachsender Distanz zum Bereich konstant oder monoton fallend ist.

11. Verfahren nach Anspruch 10, **dadurch gekennzeichnet, dass** die modifizierte Parameteranpassungsfunktion $P_{\mathrm{mod}}(\vec{x})$ für die Konditionierung der Zielfunktion (Q) wie folgt aufgebaut ist:

$$P_{\mathrm{mod}}(\vec{x}) = R(\vec{x}) + \frac{1}{W}\sqrt{-\log(PDF'(\vec{x}))}\,,$$

wobei $PDF(\vec{x})$ eine Wahrscheinlichkeitsdichtefunktion ist und für $R(\vec{x})$ folgendes gilt:

   a) innerhalb des Bereichs des Parameterraums, welcher dem räumlichen Gebiet entspricht, das den anhand des Datenobjekts ($D_1...D_4$) erwarteten Ort umgibt, ist $R(\vec{x})$ proportional zu $-\log(PDF(\vec{x}))$;
   b) ausserhalb des Bereichs des Parameterraums, welcher dem räumlichen Gebiet entspricht, das den anhand des Datenobjekts ($D_1...D_4$) erwarteten Ort umgibt, ist $R(\vec{x})$ konstant,

und wobei $W$ ein vorgebbarer Parameter ist.

12. Anordnung zur Bestimmung von Trajektorien beweglicher physischer Objekte in einem Raum, umfassend

   a) mehrere Sensoren (S1, S2, S3) zur Erfassung der Objekte im Raum und zur Erzeugung von Sensordaten;
   b) ein erstes Verarbeitungsmodul (110) zum Erzeugen von ersten Datenobjekten ($D_1...D_4$) ausgehend von den Sensordaten, wobei jedes erste Datenobjekt ($D_1...D_4$) mindestens eine Zeitangabe (t) und eine Ortsangabe (d), eines von mindestens einem der Sensoren (S1, S2, S3) erfassten Objekts sowie eine Validierungsfunktion ($V_i(x, t)$) umfasst, wobei die Validierungsfunktion ($V_i(x, t)$) eine Wahrscheinlichkeitsdichtefunktion PDF ($x_i$, $t_i$, $d_i$, $k_i$) ist, welche eine Messcharakteristik eines entsprechenden Sensors (S1, S2, S3) repräsentiert und zu einem gegebenen Zeitpunkt t jedem Ort x eine Wahrscheinlichkeitsdichte für den Aufenthalt des von den Sensordaten repräsentierten Objekts an diesem Ort zuweist;

**dadurch gekennzeichnet, dass** die Anordnung weiter Folgendes umfasst:

   c) ein zweites Verarbeitungsmodul zum Bereitstellen mindestens eines Modellobjekts ($M_1...M_3$), welches eine Parametrisierung einer Trajektorie eines der beweglichen Objekte mit mindestens einem variablen Parameter (α) repräsentiert;

d) ein drittes Verarbeitungsmodul (130) zum Berechnen eines Übereinstimmungswerts ($V_{ik}$) für eine Zuordnung des Datenobjekts ($D_1...D_4$) zu mindestens einem der bereitgestellten Modellobjekte ($M_1...M_3$) durch Auswerten der Validierungsfunktion ($V_i(x, t)$) des Datenobjekts ($D_1...D_4$) für die Modellobjekte ($M_1...M_3$), wobei anhand der Trajektorie, welche vom jeweiligen Modellobjekt (M1...M3) parametrisiert wird, ein erwarteter Aufenthaltsort des vom Modellobjekt (M1...M3) repräsentierten Objekts zu einem Zeitpunkt einer vom ersten Datenobjekt (D1...D4) repräsentierten Messung berechnet wird und die Validierungsfunktion (Vi (x, t)) in Abhängigkeit dieses Aufenthaltsorts eine Aussage über die Wahrscheinlichkeit liefert, dass die vom ersten Datenobjekt (D1...D4) repräsentierten Sensordaten auf das vom jeweiligen Modellobjekt (M1...M3) repräsentierte Objekt zurückgehen, so dass die Validierungsfunktion ($V_i(x,t)$) der ersten Datenobjekte ($D_1...D_4$) bei Anwendung auf ein betrachtetes der Modellobjekte ($M_1...M_3$) einen Wert liefert, welcher ein Mass ist für eine Wahrscheinlichkeit, dass das betrachtete Modellobjekt ($M_1...M_3$) einem physischen Objekt im beobachteten Raum entspricht, welches von den Daten des Datenobjekts ($D_1...D_4$) repräsentiert wird, so dass der Übereinstimmungswert angibt, wie wahrscheinlich es ist, dass ein Modellobjekt ($M_1...M_3$) demjenigen physischen Objekt entspricht, welches vom Datenobjekt ($D_1...D_4$) repräsentiert wird;

e) ein viertes Verarbeitungsmodul zum Bereitstellen eines zusätzlichen Modellobjekts ($M_1...M_3$), welches eine Parametrisierung einer Trajektorie eines der beweglichen physischen Objekte mit mindestens einem variablen Parameter (α) repräsentiert;

f) ein fünftes Verarbeitungsmodul zum Zuordnen eines der Datenobjekte ($D_1...D_4$) zu mindestens einem der Modellobjekte ($M_1...M_3$); und

g) ein sechstes Verarbeitungsmodul (150) zur numerischen Optimierung durch Minimieren einer Zielfunktion (Q) durch Variation des mindestens einen variablen Parameters (α) des Modellobjekts ($M_1...M_3$), zu welchem das Datenobjekt ($D_1...D_4$) zugeordnet wurde, wobei die Zielfunktion (Q) eine Funktion ist von Parameteranpassungsfunktionen wenigstens eines Teils der dem Modellobjekt ($M_1...M_3$) zugeordneten Datenobjekte ($D_1...D_4$) und ein Mass ist für Abweichungen der von den Datenobjekten repräsentierten Messwerte von der parametrisierten Trajektorie des Modells, und zum Aktualisieren des mindestens einen variablen Parameters (α) des Modellobjekts ($M_1...M_3$);

wobei das vierte Verarbeitungsmodul und das fünfte Verarbeitungsmodul derart gesteuert sind, dass ein zusätzliches Modellobjekt bereitgestellt und das Datenobjekt dem zusätzlichen Modellobjekt ($M_1...M_3$) zugeordnet wird, wenn keiner der Übereinstimmungswerte ($V_{ik}$) in einem vorgegebenen Bereich liegt und dass das Datenobjekt ($D_1...D_4$) demjenigen bereitgestellten Modellobjekt ($M_1...M_3$) zugeordnet wird, welches dem besten Übereinstimmungswert entspricht, wenn mindstens einer der Übereinstimmungswerte ($V_{ik}$) im vorgegebenen Bereich liegt.

**13.** Anordnung nach Anspruch 12, **gekennzeichnet durch** eine Sensorstation (10, 20, 30), welche folgendes umfasst:

a) mindestens einer der Sensoren (S1, S2, S3) zur Erfassung der Objekte im Raum; und

b) das erste Verarbeitungsmodul (110) zum Erzeugen von ersten Datenobjekten ($D_1...D_4$) ausgehend von den Sensordaten, wobei jedes erste Datenobjekt ($D_1...D_4$) mindestens eine Zeitangabe (t) und eine Ortsangabe (d) des von dem mindestens einen Sensor (S1, S2, S3) erfassten Objekts sowie eine Validierungsfunktion ($V_i(x, t)$) umfasst.

**14.** Anordnung nach Anspruch 13, **gekennzeichnet durch** eine Verarbeitungsstation, welche folgendes umfasst:

a) das zweite Verarbeitungsmodul zum Bereitstellen des mindestens einen Modellobjekts ($M_1...M_3$);

b) das dritte Verarbeitungsmodul (130) zum Berechnen des Übereinstimmungswerts ($V_{ik}$);

c) das vierte Verarbeitungsmodul zum Bereitstellen des zusätzlichen Modellobjekts ($M_1...M_3$);

d) das fünfte Verarbeitungsmodul zum Zuordnen eines der Datenobjekte ($D_1...D_4$) zu mindestens einem der Modellobjekte ($M_1...M_3$); und

e) das sechste Verarbeitungsmodul (150) zur numerischen Optimierung der Zielfunktion (Q),

wobei die Anordnung weiter ein Netzwerk (40) zur Verbindung der Sensorstation (10, 20, 30) mit der Verarbeitungsstation umfasst.

## Claims

**1.** Method for determining trajectories of movable physical objects in a space on the basis of sensor data from a plurality of sensors (S1, S2, S3), comprising the following steps:

a) generating first data objects ($D_1$ ... $D_4$) based on the sensor data, wherein each first data object ($D_1$ ... $D_4$) comprises at least one timestamp (t) and one location specification (d) of an object detected by at least one of the sensors (S1, S2, S3), and a validation function ($V_i(x,t)$), wherein the validation function ($V_i(x, t)$) is a probability density function PDF ($x_i$, $t_i$, $d_i$, $k_i$) which represents a measurement characteristic of a given sensor (S1, S2, S3) and, at a given time t, assigns to all locations x a probability density for the occupancy of the object represented by the sensor data at this location;

**characterized in that** the method further comprises the following steps:
b) providing at least one model object ($M_1$ ... $M_3$), which represents a parameterization of a trajectory of one of the movable objects with at least one variable parameter ($\alpha$);
for the first data objects ($D_1$ ... $D_4$) :

c) calculating a correspondence value ($V_{ik}$) for an assignment of the data object ($D_1$ ... $D_4$) to at least one of the provided model objects ($M_1$ ... $M_3$) by way of evaluating the validation function ($V_i(x, t)$) of the data object ($D_1$ ... $D_4$) for the model objects ($M_1$ ... $M_3$), wherein an expected whereabouts at a time of a measurement represented by the first data object ($D_1$ ... $D_4$) of the object represented by the model object ($M_1$ ... $M_3$) is calculated on the basis of the trajectory which is parameterized by the respective model object ($M_1$ ... $M_3$), and the validation function ($V_i(x, t)$) supplies on the basis of this whereabouts a statement about the probability that the sensor data represented by the first data object ($D_1$ ... $D_4$) can be traced back to the object represented by the respective model object ($M_1$ ... $M_3$), such that the validation function ($V_i(x, t)$) of the first data objects ($D_1$ ... $D_4$) when applied to a considered one of the model objects ($M_1$ ... $M_3$) supplies a value which is a measure for a probability that the considered model object ($M_1$ ... $M_3$) corresponds to a physical object in the observed space, which physical object is represented by the data of the data object ($D_1$ ... $D_4$) such that the correspondence value specifies how likely it is that a model object ($M_1$ ... $M_3$) corresponds to the physical object that is represented by the data object ($D_1$ ... $D_4$) ;
d) providing an additional model object ($M_1$ ... $M_3$), which represents a parameterization of a trajectory of one of the movable physical objects with at least one variable parameter ($\alpha$), and assigning the data object ($D_1$ ... $D_4$) to the additional model object ($M_1$ ... $M_3$) if none of the correspondence values ($V_{ik}$) lie in a predetermined range;
e) assigning the data object ($D_1$ ... $D_4$) to that provided model object ($M_1$ ... $M_3$) which corresponds to the best correspondence value ($V_{ik}$) if at least one of the correspondence values ($V_{ik}$) lies in the predetermined range; and
f) performing a numerical optimization by minimization of a target function (Q) for the model object ($M_1$ ... $M_3$) to which the data object ($D_1$ ... $D_4$) was assigned, by varying the at least one variable parameter ($\alpha$) of the model object ($M_1$ ... $M_3$), wherein the target function (Q) is a function of parameter adaptation functions of at least some of the data objects ($D_1$ ... $D_4$) assigned to the model object ($M_1$ ... $M_3$) and is a measure for deviations of the measured values represented by the data objects from the parameterized trajectory of the model, and updating the at least one variable parameter ($\alpha$) of this model object ($M_1$ ... $M_3$);

wherein the steps are carried out for sensor data subsequently coming in such that a detected situation is continually updated.

2. Method according to Claim 1, **characterized in that** the sensor data are radar data, in particular distance and angle information from a plurality of search radars (11, 21, 31) that are spaced apart in space.

3. Method according to Claim 1 or 2, **characterized in that** second data objects are provided and assigned to one or more model objects ($M_1$ ... $M_3$), wherein these second data objects represent previously known information, in particular in respect of realistic whereabouts and/or suspected future events, or boundary conditions in relation to possible trajectories, in particular maximum speeds or accelerations.

4. Method according to any one of Claims 1 to 3, **characterized in that** a model-assisted mapping onto timestamps and/or location specifications (t, d) is applied for evaluating the validation function ($V_i(x, t)$) of the data object ($D_1$ ... $D_4$) for the model objects ($M_1$ ... $M_3$) and the calculation of at least one of the parameter adaptation functions, wherein the utilized model models disturbance effects which influence the sensor data detected by the corresponding sensor (S1, S2, S3).

5. Method according to Claim 4, **characterized in that** the model-assisted mapping generates two or more image representations in order to detect disturbance effects which lead to a multiplication of signals from a physical object to be detected.

6.  Method according to any one of Claims 1 to 5, **characterized in that** the target function (Q) for the numerical optimization comprises a function which links sensor data of the same sensor (S1, S2, S3) which represent different times, wherein the function is defined in such a way that unchanging influences of systematic errors on the sensor data at the different times are preferred within numerical optimization.

7.  Method according to any one of Claims 1 to 6, **characterized in that** conditioning of the target function (Q) of the optimization is carried out for the numerical optimization of the correspondence value ($V_{ik}$) by virtue of the parameter adaptation function of at least one of the first data objects ($D_1 ... D_4$) being modified in such a way that, independently of the unmodified parameter adaptation function, a gradient of the modified parameter adaptation function has a magnitude in a predetermined range, except for in a region of the parameter space corresponding to a spatial region which surrounds the location that is expected on the basis of the data object ($D_1 ... D_4$).

8.  Method according to Claim 7, **characterized in that** the conditioning comprises the following steps:

    a) cutting off an unmodified parameter adaptation function along a boundary which corresponds to a lower bound of a probability of presence;
    b) complementing the resulting function by an auxiliary function such that the gradient of the modified parameter adaptation function has the magnitude in the predetermined range, except for in a region within the boundary.

9.  Method according to Claim 7 or 8, **characterized in that**, except for a first constant term, the modified parameter adaptation function is substantially proportional to the logarithm of a probability of presence at the corresponding location at locations at which an object was present with a high probability at the considered time on the basis of the data object ($D_1 ... D_4$) and it is such that, except for a second constant term, the modified validation function at locations with a low probability of presence is at least approximately proportional to the distance between said location and a location with a highest probability of presence.

10. Method according to any one of Claims 7 to 9, **characterized in that**, in the region of the parameter space which corresponds to the spatial region that surrounds the expected location on the basis of the data object ($D_1 ... D_4$), the modified parameter adaptation function represents a quadratic form of the parameters, which are to be optimized numerically, of the parameter adaptation function and **in that** the magnitude of the gradient of the modified parameter adaptation function outside of this region is constant or monotonically decreasing with increasing distance from the region.

11. Method according to Claim 10, **characterized in that** the modified parameter adaptation function $P_{\mathrm{mod}}(\vec{x})$ for conditioning the target function (Q) is constructed as follows:

$$P_{\mathrm{mod}}(\vec{x}) = R(\vec{x}) + \frac{1}{W}\sqrt{-\log(PDF'(\vec{x}))} \, ,$$

where $PDF(\vec{x})$ is a probability density function and the following applies to $R(\vec{x})$:

    a) $R(\vec{x})$ is proportional to $-\log(PDF'(\vec{x}))$ within the region of the parameter space which corresponds to the spatial region that surrounds the expected location on the basis of the data object ($D_1 ... D_4$);
    b) $R(\vec{x})$ is constant outside of the region of the parameter space which corresponds to the spatial region that surrounds the expected location on the basis of the data object ($D_1 ... D_4$),

and where $W$ is a predeterminable parameter.

12. Arrangement for determining trajectories of movable physical objects in a space, comprising

    a) a plurality of sensors (S1, S2, S3) for detecting the objects in the space and for generating sensor data;
    b) a first processing module (110) for generating first data objects ($D_1 ... D_4$) based on the sensor data, wherein each first data object ($D_1 ... D_4$) comprises at least one timestamp (t) and one location specification (d) of an object detected by at least one of the sensors (S1, S2, S3), and a validation function($V_i(x,t)$), wherein the validation function ($V_i(x, t)$) is a probability density function PDF ($x_i$, $t_i$, $d_i$, $k_i$) which represents a measurement characteristic of a given sensor (S1, S2, S3) and, at a given time t, assigns to all locations x a probability density for the occupancy of the object represented by the sensor data at this location;

**characterized in that** the arrangement further comprises the following:

c) a second processing module for providing at least one model object ($M_1$ ... $M_3$), which represents a parameterization of a trajectory of one of the movable objects with at least one variable parameter ($\alpha$);

d) a third processing module (130) for calculating a correspondence value ($V_{ik}$) for an assignment of the data object ($D_1$ ... $D_4$) to at least one of the provided model objects ($M_1$ ... $M_3$) by way of evaluating the validation function ($V_i(x, t)$) of the data object ($D_1$ ... $D_4$) for the model objects ($M_1$ ... $M_3$), wherein an expected whereabouts at a time of a measurement represented by the first data object ($D_1$ ... $D_4$) of the object represented by the model object ($M_1$ ... $M_3$) is calculated on the basis of the trajectory which is parameterized by the respective model object ($M_1$ ... $M_3$), and the validation function ($V_i(x, t)$) supplies on the basis of this whereabouts a statement about the probability that the sensor data represented by the first data object ($D_1$ ... $D_4$) can be traced back to the object represented by the respective model object ($M_1$ ... $M_3$),

such that the validation function ($V_i(x, t)$) of the first data objects ($D_1$ ... $D_4$) when applied to a considered one of the model objects ($M_1$ ... $M_3$) supplies a value which is a measure for a probability that the considered model object ($M_1$ ... $M_3$) corresponds to a physical object in the observed space, which physical object is represented by the data of the data object ($D_1$ ... $D_4$) such that the correspondence value specifies how likely it is that a model object ($M_1$ ... $M_3$) corresponds to that physical object that is represented by the data object ($D_1$ ... $D_4$) ;

e) a fourth processing module for providing an additional model object ($M_1$ ... $M_3$), which represents a parameterization of a trajectory of one of the movable physical objects with at least one variable parameter ($\alpha$);

f) a fifth processing module for assigning one of the data objects ($D_1$ ... $D_4$) to at least one of the model objects ($M_1$ ... $M_3$) ; and

g) a sixth processing module (150) for the numerical optimization by minimization of a target function (Q) by varying the at least one variable parameter ($\alpha$) of the model object ($M_1$ ... $M_3$) to which the data object ($D_1$ ... $D_4$) was assigned, wherein the target function (Q) is a function of parameter adaptation functions of at least some of the data objects ($D_1$ ... $D_4$) assigned to the model object ($M_1$ ... $M_3$) and is a measure for deviations of the measured values represented by the data objects from the parameterized trajectory of the model, and for updating the at least one variable parameter ($\alpha$) of the model object ($M_1$ ... $M_3$),

wherein the fourth processing module and the fifth processing modules are controlled in such a way that an additional model object is provided and the data object is assigned to the additional model object ($M_1$ ... $M_3$) if none of the correspondence values ($V_{ik}$) lie in a predetermined range and that the data object ($D_1$ ... $D_4$) is assigned to that provided model object ($M_1$ ... $M_3$) which corresponds to the best correspondence value if at least one of the correspondence values ($V_{ik}$) lies in the predetermined range.

13. Arrangement according to Claim 12, **characterized by** a sensor station (10, 20, 30), which comprises the following:

a) at least one of the sensors (S1, S2, S3) for detecting the objects in the space; and

b) the first processing module (110) for generating first data objects ($D_1$ ... $D_4$) based on the sensor data, wherein each first data object ($D_1$ ... $D_4$) comprises at least one timestamp (t) and one location specification (d) of the object detected by the at least one sensor (S1, S2, S3), and a validation function ($V_i(x, t)$).

14. Arrangement according to Claim 13, **characterized by** a processing station, which comprises the following:

a) the second processing module for providing the at least one model object ($M_1$ ... $M_3$) ;

b) the third processing module (130) for calculating the correspondence value ($V_{ik}$);

c) the fourth processing module for providing the additional model object ($M_1$ ... $M_3$);

d) the fifth processing module for assigning one of the data objects ($D_1$ ... $D_4$) to at least one of the model objects ($M_1$ ... $M_3$) ; and

e) the sixth processing module (150) for the numerical optimization of the target function (Q),

wherein the arrangement furthermore comprises a network (40) for connecting the sensor station (10, 20, 30) to the processing station.

**Revendications**

1. Procédé de détermination de trajectoires d'objets physiques en mouvement dans un espace à partir de données de capteurs provenant d'une pluralité de capteurs (S1, S2, S3), ledit procédé comprenant les étapes suivantes :

   a) générer des premiers objets de données ($D_1...D_4$) à partir des données du capteur, chaque premier objet de données ($D_1...D_4$) incluant au moins une information de temps (t) et une information de lieu (d) d'un objet détecté par au moins un des capteurs (S1, S2, S3) ainsi qu'une fonction de validation ($V_i(x,t)$), la fonction de validation ($V_i(x, t)$) étant une fonction de densité de probabilité PDF ($x_i$, $t_i$, $d_i$, $k_i$), qui représente une caractéristique de mesure d'un capteur correspondant (S1, S2, S3) et qui assigne à un instant donné t et à chaque lieu x une densité de probabilité selon laquelle l'objet représenté par les données de capteur soit présent en ce lieu ;

   **caractérisé en ce que** le procédé comprend en outre les étapes suivantes :
   b) fournir au moins un objet modèle ($M_1...M_3$) qui représente un paramétrage d'une trajectoire de l'un des objets en mouvement avec au moins un paramètre variable ($\alpha$) ;
   pour les premiers objets de données ($D_1...D_4$) :

   c) calculer une valeur de correspondance ($V_{ik}$) pour une association de l'objet de données ($D_1...D_4$) à au moins un des objets modèles fournis ($M_1...M_3$) par évaluation de la fonction de validation ($V_i(x,t)$) de l'objet de données ($D_1...D_4$) pour les objets modèles ($M_1...M_3$), un lieu de présence attendu de l'objet, représenté par l'objet modèle ($M_1...M_3$), à un instant d'une mesure représentée par un premier objet de données ($D_1...D_4$) étant calculé sur la base de la trajectoire qui est paramétrée par l'objet modèle respectif ($M_1...M_3$) et la fonction de validation ($V_i(x, t)$) donnant en fonction de ce lieu de présence une indication sur la probabilité que les données de capteur représentées par le premier objet de données ($D_1...D_4$) soient attribuées à l'objet représenté par l'objet modèle respectif ($M_1...M_3$),
   de sorte que la fonction de validation ($V_i(x, t)$) des premiers objets de données ($D_1...D_4$), lorsqu'elle est appliquée à l'un des objets modèles ($M_1...M_3$) pris en considération, donne une valeur qui est une mesure d'une probabilité que l'objet modèle ($M_1...M_3$) pris en considération corresponde dans l'espace observé à un objet physique qui est représenté par les données de l'objet de données ($D_1...D_4$),
   de sorte que la valeur de correspondance indique quelle est la probabilité qu'un objet modèle ($M_1...M_3$) corresponde à l'objet physique qui est représenté par l'objet de données ($D_1...D_4$) ;
   d) si aucune des valeurs de correspondance ($V_{ik}$) ne se situe dans une plage spécifiée, fournir un objet modèle supplémentaire ($M_1...M_3$) qui représente un paramétrage d'une trajectoire de l'un des objets physiques en mouvement avec au moins un paramètre variable ($\alpha$), et associer l'objet de données ($D_1...D_4$) à l'objet modèle supplémentaire ($M_1...M_3$) ;
   e) si au moins une des valeurs de correspondance ($V_{ik}$) est dans la plage spécifiée, associer l'objet de données ($D_1...D_4$) à l'objet modèle ($M_1...M_3$) fourni qui correspond à la meilleure valeur de correspondance ($V_{ik}$) ; et
   f) pour l'objet modèle ($M_1...M_3$) auquel l'objet de données ($D_1...D_4$) a été associé, effectuer une optimisation numérique par minimisation d'une fonction cible (Q) par variation de l'au moins un paramètre variable ($\alpha$) de l'objet modèle ($M_1...M_3$), la fonction cible (Q) étant une fonction parmi des fonctions d'adaptation de paramètres d'au moins une partie des objets de données ($D_1...D_4$) associés à l'objet modèle ($M_1...M_3$) et étant une mesure des écarts entre des valeurs de mesure, représentées par les objets de données, et la trajectoire paramétrée du modèle, et actualiser l'au moins un paramètre variable ($\alpha$) de cet objet modèle ($M_1...M_3$) ;

   les étapes étant exécutées pour des données de capteur arrivant successivement de sorte qu'une position détectée est constamment actualisée.

2. Procédé selon la revendication 1, **caractérisé en ce que** les données de capteur sont des données radar, notamment des informations de distance et d'angle provenant d'une pluralité de radars de recherche (11, 21, 31) situés spatialement à distance les uns des autres.

3. Procédé selon la revendication 1 ou 2, **caractérisé en ce que** des deuxièmes objets de données sont fournis et associés à un ou plusieurs objets modèles ($M_1...M_3$), ces deuxièmes objets de données représentant des informations déjà connues, relatives notamment à des lieux de présence réalistes et/ou à des événements futurs suspectés, ou à des conditions aux limites pour des trajectoires possibles, en particulier des vitesses ou accélérations maximales.

4. Procédé selon l'une des revendications 1 à 3, **caractérisé en ce que**, pour évaluer la fonction de validation ($V_i(x, t)$) de l'objet de données ($D_1...D_4$) pour les objets modèles ($M_1...M_3$) et le calcul d'au moins une des fonctions d'adaptation de paramètres, une reproduction basée sur un modèle est appliquée à des informations de temps et/ou de lieu (t, d), le modèle utilisé modélisant des effets perturbateurs qui influent sur les données de capteur détectées par le capteur correspondant (S1, S2, S3).

5. Procédé selon la revendication 4, **caractérisé en ce que** la reproduction basée sur un modèle génère deux images ou plus afin de détecter des effets perturbateurs qui conduisent à une multiplication des signaux d'un objet physique à détecter.

6. Procédé selon l'une des revendications 1 à 5, **caractérisé en ce que** la fonction cible (Q) destinée à l'optimisation numérique inclut une fonction qui combine les données de capteur d'un même capteur (S1, S2, S3) qui représentent des instants différents, la fonction étant définie de telle sorte que des influences constantes d'erreurs systématiques sur les données de capteur des différents instants soient préférées dans l'optimisation numérique.

7. Procédé selon l'une des revendications 1 à 6, **caractérisé en ce que** la fonction cible (Q) de l'optimisation est conditionnée pour l'optimisation numérique de la valeur de correspondance ($V_{ik}$) **en ce que** la fonction d'adaptation de paramètres de l'un au moins des premiers objets de données ($D_1...D_4$) est modifiée de telle manière que, indépendamment de la fonction d'adaptation de paramètres non modifiée, un gradient de la fonction d'adaptation de paramètres modifiée a une valeur dans une plage spécifiée, à l'exception d'un domaine de l'espace des paramètres qui correspond à une région de l'espace qui entoure le lieu attendu sur la base de l'objet de données ($D_1...D_4$).

8. Procédé selon la revendication 7, **caractérisé en ce que** le conditionnement comprend les étapes suivantes :

   a) découper une fonction d'adaptation de paramètres non modifiée le long d'une interface qui correspond à une limite inférieure d'une probabilité de présence ;
   b) compléter la fonction résultante avec une fonction auxiliaire de sorte que le gradient de la fonction d'adaptation de paramètres modifiée ait la valeur dans la plage spécifiée, à l'exception d'une zone à l'intérieur de l'interface.

9. Procédé selon la revendication 7 ou 8, **caractérisé en ce que**, en des lieux où un objet était présent à l'instant observé avec une probabilité élevée sur la base de l'objet de données ($D_1...D_4$), la fonction d'adaptation de paramètres modifiée est sensiblement proportionnelle au logarithme d'une probabilité de présence au lieu correspondant à l'exception d'un premier terme constant, et **en ce que**, en des emplacements ayant une faible probabilité de présence, la fonction de validation modifiée est au moins approximativement proportionnelle à la distance entre le lieu et un lieu ayant la plus grande probabilité de présence, à l'exception d'un deuxième terme constant.

10. Procédé selon l'une des revendications 7 à 9, **caractérisé en ce que** la fonction d'adaptation de paramètres modifiée dans le domaine de l'espace des paramètres, qui correspond à la région de l'espace qui entoure le lieu attendu sur la base de l'objet de données ($D_1...D_4$), représente une forme quadratique des paramètres à optimiser numériquement de la fonction d'adaptation de paramètres et **en ce que** la valeur du gradient de la fonction d'adaptation de paramètres modifiée, à l'exception de ce domaine est constante ou décroissante de façon monotone à mesure que la distance au domaine augmente.

11. Procédé selon la revendication 10, **caractérisé en ce que** la fonction d'adaptation de paramètres modifiée $P_{mod}(\vec{x})$ destinée à conditionner la fonction cible (Q) est élaborée comme suit :

$$P_{mod}(\vec{x}) = R(\vec{x}) + \frac{1}{W} \sqrt{-\log(PDF'(\vec{x}))}$$

où $PDF(\vec{x})$ est une fonction de densité de probabilité et ce qui suit s'applique à $R(\vec{x})$ :

   a) dans le domaine de l'espace des paramètres qui correspond à la région de l'espace qui entoure le lieu attendu sur la base de l'objet de données ($D_1...D_4$), $R(\vec{x})$ est proportionnel à $-\log(PDF'(\vec{x}))$ ;
   b) en dehors du domaine de l'espace des paramètres qui correspond à la région de l'espace qui entoure le lieu attendu sur la base de l'objet de données ($D_1...D_4$), $R(\vec{x})$ est constant,

et où $W$ est un paramètre spécifiable.

**12.** Dispositif de détermination de trajectoires d'objets physiques en mouvement dans un espace, ledit dispositif comprenant

a) une pluralité capteurs (S1, S2, S3) destinés à détecter les objets dans l'espace et à générer des données de capteur ;

b) un premier module de traitement (110) destiné à générer des premiers objets de données ($D_1...D_4$) sur la base des données du capteur, chaque premier objet de données ($D_1...D_4$) incluant au moins une information de temps (t) et une information de lieu (d) d'un objet détecté par au moins un des capteurs (S1, S2, S3) ainsi qu'une fonction de validation ($V_i(x, t)$), la fonction de validation ($V_i(x, t)$) étant une fonction de densité de probabilité PDF ($x_i$, $t_i$, $d_i$, $k_i$), qui représente une caractéristique de mesure d'un capteur correspondant (S1, S2, S3) et qui assigne à un instant donné t et à chaque lieu x une densité de probabilité selon laquelle l'objet représenté par les données de capteur soit présent en ce lieu ;

**caractérisé en ce que** le dispositif comprend en outre :

c) un deuxième module de traitement destiné à fournir au moins un objet modèle ($M_1...M_3$), qui représente un paramétrage d'une trajectoire de l'un des objets en mouvement avec au moins un paramètre variable ($\alpha$) ;

d) un troisième module de traitement (130) destiné à calculer une valeur de correspondance ($V_{ik}$) pour une association de l'objet de données ($D_1...D_4$) à au moins un des objets modèles fournis ($M_1...M_3$) par évaluation de la fonction de validation ($V_i(x, t)$) de l'objet de données ($D_1...D_4$) pour les objets modèles ($M_1...M_3$), un lieu de présence attendu de l'objet, représenté par l'objet modèle ($M_1...M_3$), à un instant d'une mesure représentée par un premier objet de données ($D_1...D_4$) étant calculé sur la base de la trajectoire qui est paramétrée par l'objet modèle respectif ($M_1...M_3$) et la fonction de validation ($V_i(x, t)$) donnant en fonction de ce lieu de présence une indication sur la probabilité que les données de capteur représentées par le premier objet de données ($D_1...D_4$) soient attribuées à l'objet représenté par l'objet modèle respectif ($M_1...M_3$), de sorte que la fonction de validation ($V_i(x, t)$) des premiers objets de données ($D_1...D_4$), lorsqu'elle est appliquée à l'un des objets modèles ($M_1...M_3$) pris en considération, donne une valeur qui est une mesure d'une probabilité que l'objet modèle ($M_1...M_3$) pris en considération corresponde dans l'espace observé à un objet physique qui est représenté par les données de l'objet de données ($D_1...D_4$), de sorte que la valeur de correspondance indique quelle est la probabilité qu'un objet modèle ($M_1...M_3$) corresponde à l'objet physique qui est représenté par l'objet de données ($D_1...D_4$) ;

e) un quatrième module de traitement destiné à fournir un objet modèle supplémentaire ($M_1...M_3$), qui représente un paramétrage d'une trajectoire de l'un des objets physiques en mouvement avec au moins un paramètre variable ($\alpha$) ;

f) un cinquième module de traitement destiné à associer l'un des objets de données ($D_1...D_4$) à l'un au moins des objets modèles ($M_1...M_3$) ; et

g) un sixième module de traitement (150) destiné à effectuer une optimisation numérique par minimisation d'une fonction cible (Q) par variation de l'au moins un paramètre variable ($\alpha$) de l'objet modèle ($M_1...M_3$) auquel l'objet de données ($D_1...D_4$) a été associé, la fonction cible (Q) étant une fonction parmi des fonctions d'adaptation de paramètres d'au moins une partie des objets de données ($D_1...D_4$) associés à l'objet modèle ($M_1...M_3$) et étant une mesure des écarts entre des valeurs de mesure, représentées par les objets de données, et la trajectoire paramétrée du modèle, et à actualiser l'au moins un paramètre variable ($\alpha$) de cet objet modèle ($M_1...M_3$) ;

le quatrième module de traitement et le cinquième module de traitement étant commandés de manière à fournir un objet modèle supplémentaire et à associer l'objet de données à l'objet modèle supplémentaire ($M_1...M_3$) si aucune des valeurs de correspondance ($V_{ik}$) n'est dans une plage spécifiée et à associer l'objet de données ($D_1...D_4$) à l'objet modèle ($M_1...M_3$) fourni qui correspond à la meilleure valeur de correspondance si au moins une des valeurs de correspondance ($V_{ik}$) est dans la plage spécifiée.

**13.** Dispositif selon la revendication 12, **caractérisé par** une station de détection (10, 20, 30) qui comprend :

a) au moins un des capteurs (S1, S2, S3) destiné à détecter les objets dans l'espace ; et

b) le premier module de traitement (110) destiné à générer des premiers objets de données ($D_1...D_4$) sur la base des données de capteur, chaque premier objet de données ($D_1...D_4$) incluant au moins une information de temps (t) et une information de lieu (d) de l'objet détecté par l'au moins un capteur (S1, S2, S3) ainsi qu'une fonction de validation ($V_i(x, t)$).

**14.** Dispositif selon la revendication 13, **caractérisé par** une station de traitement qui comprend :

a) le deuxième module de traitement destiné à fournir l'au moins un objet modèle ($M_1...M_3$) ;

b) le troisième module de traitement (130) destiné à calculer la valeur de correspondance ($V_{ik}$) ;

c) le quatrième module de traitement destiné à fournir l'objet modèle supplémentaire ($M_1...M_3$) ;

d) le cinquième module de traitement destiné à associer l'un des objets de données ($D_1...D_4$) à l'un au moins des objets modèles ($M_1...M_3$) ; et

e) le sixième module de traitement (150) destiné à effectuer une optimisation numérique de la fonction cible (Q),

le dispositif comprenant en outre un réseau (40) destiné à relier la station de détection (10, 20, 30) à la station de traitement.

**Fig. 1**

**Fig. 2**

Fig. 3

# Fig. 4

Fig. 5A

Fig. 5B

A →                    S1                    S2              S3                    B

## Fig. 6

## Fig. 7A

## Fig. 7B

**Fig. 8A**

**Fig. 8B**

**Fig. 8C**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005041705 A1

- WO 2007144570 A1

**In der Beschreibung aufgeführte Nicht-Patentliteratur**

- **S. BLACKMAN et al.** Multiple Sensor Tracking: Issues and Methods. *Design and Analysis of Modern Tracking Systems,* 01. Januar 1999, 595-659

- **S.J. ASSEO.** *Integration of active an passive track files from internetted aircraft for enhanced situation awareness,* 232-250